# EUROPÄISCHE PATENTSCHRIFT

(11) **EP 2 963 450 B1**
(45) Veröffentlichungstag und Bekanntmachung des Hinweises auf die Patenterteilung: **06.03.2019**
(21) Anmeldenummer: 14175852.4
(22) Anmeldetag: 04.07.2014
(51) Int. Cl.: G01S 5/00, G01S 19/48, G01C 21/20, H04W 4/02, G01S 19/42

(54) **Verfahren und Positionsbestimmungssystem zur Positionsbestimmung einer mobilen Kommunikationseinrichtung unter Verwendung eines Messplans**
Method and position determination system for determining the position of a mobile communication device using a measuring plan
Procédé et système de détermination de position destinés à la détermination de position d'un dispositif de communication mobile à l'aide d'un plan de mesure

(43) Veröffentlichungstag der Anmeldung: 06.01.2016
(73) Patentinhaber: Deutsche Telekom AG, 53113 Bonn (DE)
(72) Erfinder: Michael, Witych, 53227 Bonn (DE)
(74) Vertreter: Blumbach · Zinngrebe Patent- und Rechtsanwälte

(56) Entgegenhaltungen:
- EP-A2- 2 372 306
- WO-A1-2011/109860
- WO-A2-2006/099632
- US-A- 5 999 126
- US-A1- 2009 192 709
- US-A1- 2010 106 603
- US-A1- 2014 107 919
- US-B1- 6 707 424

## Beschreibung

Die Erfindung betrifft ein Verfahren und ein Positionsbestimmungssystem zur Positionsbestimmung einer mobilen Kommunikationseinrichtung unter Verwendung eines Messplans, sowie eine mobile Kommunikationseinrichtung und ein Computerprogramm.

Es sind Systeme zur Positionsbestimmung, wie zum Beispiel GPS-Systeme bekannt, welche einem geeigneten Empfänger ermöglichen, seine Position zu bestimmen.

Darüber hinaus sind tragbare Navigationsgeräte bekannt, welche in der Lage sind, einen Nutzer zu einem festgelegten Ziel zu führen.

Der Erfindung liegt die Aufgabe zugrunde, ein Verfahren, ein Positionsbestimmungssystem, eine mobile Kommunikationseinrichtung und ein Computerprogramm zur Verfügung zu stellen, mit denen die Position einer mobilen, drahtlosen Kommunikationseinrichtung bezüglich eines vorgegebenen Zielortes unter Einhaltung vorgegebener Kriterien ausreichend präzise bestimmt werden kann.

Ein Kerngedanke der Erfindung kann darin gesehen werden, in einer mobilen, drahtlosen Kommunikationseinrichtung vorzugsweise automatisiert einen Messplan hinsichtlich eines vorgegebenen geografischen Hauptziels und, wenn gewünscht oder erforderlich, zusätzlich einen Messplan hinsichtlich wenigstens eines vorgegebenen geografischen Zwischenziels jeweils an Hand vorgegebener Kriterien zu erstellen und diesen oder diese vor der jeweiligen realen Durchführung zu bewerten, um bei realer Durchführung des jeweils positiv bewerteten Messplans die Positionskoordinaten der mobilen, drahtlosen Kommunikationseinrichtung unter Einhaltung einer vorbestimmten Positionsgenauigkeit bezüglich des geografischen Hauptziels und gegebenenfalls bezüglich des wenigstens einen Zwischenziels für den Zeitpunkt berechnen bzw. schätzen zu können, zu dem die mobile Kommunikationseinrichtung im Wesentlichen das geografische Hauptziel und gegebenenfalls das geografische Zwischenziel erreicht.

Gemäß einem Gesichtspunkt kann ein Messplan erstellt werden, der bei Durchführung veranlasst, dass die mobile Kommunikationseinrichtung ihre Position zum Beispiel mittels eines GNSS-Empfängers, insbesondere eines GPS-Empfängers, selbst ermittelt und, sofern geplant, verschiedene Messungen zu wenigstens einer anderen Kommunikationseinrichtung durchführt oder zwischen anderen Kommunikationseinrichtungen durchführen lässt, um Beobachtungsinformationen, auch zu verschiedenen Zeitpunkten zu erhalten. Diese Beobachtungswerte werden berücksichtigt, um die Positionskoordinaten der mobilen, drahtlosen Kommunikationseinrichtung unter Einhaltung der vorbestimmten Positionsgenauigkeit bezüglich des geografischen Ziels für den Zeitpunkt berechnen bzw. schätzen zu können, zu dem die mobile Kommunikationseinrichtung im Wesentlichen das geografische Ziel erreicht.

Gemäß einem weiteren Aspekt der Erfindung enthält der Messplan beispielsweise Angaben über den Zeitpunkt und/oder die Position der Durchführung des Messplans, die zu erhebenden Messungen und gegebenenfalls über die Kommunikationseinrichtungen, welche vorbestimmte Messungen zum Ermitteln von Positions- und/oder Beobachtungsinformationen erheben sollen. Diese Positions- und/oder Beobachtungsinformationen können dann bei der Berechnung der Positionskoordinaten der mobilen, drahtlosen Kommunikationseinrichtung und der Genauigkeit wenigstens einer der Positionskoordinaten beim Erreichen des vorgegebenen geografischen Ziels berücksichtigt werden.

Gemäß einem weiteren Aspekt der Erfindung enthält der Messplan beispielsweise auch Toleranzbereiche der angenommenen Positionsgenauigkeit vor und nach der Anwendung des Messplans um, sofern der Zielpunkt nur ein Zwischenzielpunkt auf dem Weg zum Endzielpunkt ist, die durch die Durchführung des Messplans nicht erreichte Positionsgenauigkeit ohne zum im Wesentlichen gleichen Zeitpunkt ausgeführten Zusatzmessplan zu korrigieren, da die Bandbreiten vorgeben, dass dieses auch auf den weiteren Zwischenzielpunkten auf dem Weg zum Endzielpunkt durch eine Abfolge korrigierter Messpläne erreichbar ist.

Gemäß einem weiteren Aspekt der Erfindung enthält der Messplan die angenommenen Positionsgenauigkeit nach der Anwendung des Messplans, wobei diese Genauigkeit der Position aus unterschiedlichen Kriterien abgeleitet wird, die auch als Attribute dem Messplan zugeordnet sind, so zum Beispiel die Wahrscheinlichkeit mit der eine Navigationsvorgabe zur richtigen Navigation führt, wenn die Fehlerellipse nach Umsetzung des Messplans eingehalten wird. Aus diesen Wahrscheinlichkeiten oder den korrespondierenden Irrtumswahrscheinlichkeiten können auch beim Nichteinhalten des Zeitpunktes und/oder der Position die dann geänderten Soll Positionsgenauigkeiten, gültig nach Anwendung eines zu korrigierenden Messplans, abgeleitet werden.

Bei den Kommunikationseinrichtungen kann es sich um mobile und/oder statische, drahtlose Kommunikationseinrichtungen handeln.

Das oben genannte technische Problem wird durch die Verfahrensschritte des Anspruchs 1 gelöst.

Danach wird ein Verfahren zur Positionsbestimmung einer mobilen Kommunikationseinrichtung unter Verwendung eines Messplans zur Verfügung gestellt. Das Verfahren enthält folgende Schritte:
a) Festlegen in einer ersten, mobilen Kommunikationseinrichtung, in welcher ein ausführbares Karten basiertes Navigationsprogramm gespeichert ist, der Positionskoordinaten eines geografischen Ziels, welches die erste, mobile Kommunikationseinrichtung zu einem zukünftigen Zeitpunkt erreichen wird, und Festlegen für wenigstens eine der Positionskoordinaten des geografischen Ziels einer Positionsgenauigkeit;
b) Aufstellen eines ersten Messplans zum Gewinnen von Positionsinformationen, welche Positionskoordinaten und deren Genauigkeiten enthalten, und/oder von Beobachtungsinformationen, welche Beobachtungswerte und deren Genauigkeiten enthalten, wobei der erste Messplan Angaben über zu erhebenden Messungen und eine Information über den Zeitpunkt der Durchführung des ersten Messplans enthält;
c) Liefern, unter Ansprechen auf den ersten Messplan, von Testergebnissen bezüglich der Positionskoordinaten des festgelegten geografischen Ziels und der Positionsgenauigkeit der wenigstens einen Positionskoordinate;
d) Prüfen unter Ansprechen auf die Testergebnisse, ob bei der Durchführung des ersten Messplans die in Schritt a) festgelegte Positionsgenauigkeit im Wesentlichen erreicht werden kann; wenn ja
e) Durchführen des ersten Messplans in Abhängigkeit von der im ersten Messplan enthaltenen Information, indem das Erheben der im ersten Messplan enthaltenen Messungen veranlasst wird, um aktuelle Positions- und/oder Beobachtungsinformationen zu gewinnen; und
f) Ausführen eines Optimierungsalgorithmus in Abhängigkeit von den in Schritt e) gewonnenen aktuellen Positions- und/oder Beobachtungsinformationen, um die Positionskoordinaten der ersten, mobilen Kommunikationseinrichtung und die Positionsgenauigkeit der wenigstens einen Positionskoordinate für den Zeitpunkt zu berechnen, zu dem die erste, mobile Kommunikationseinrichtung das geografische Ziel im Wesentlichen erreicht.

Angemerkt sei, dass die beiden Verfahrensschritte c) und d) als eine Bewertung des aufgestellten Messplans hinsichtlich seiner Eignung betrachtet werden können, dass bei realer Durchführung des Messplans die in Schritt a) festgelegte Positionsgenauigkeit zumindest im Wesentlichen eingehalten bzw. erreicht werden kann.

Wenn in Schritt d) das Prüfergebnis negativ ist, werden die Schritte b) bis d) zweckmäßigerweise wiederholt, bis ein positives Ergebnis vorliegt.

Mit dem Ausdruck "im Wesentlichen" soll in Schritt d) der Realität Rechnung getragen werden, dass bei der Prüfung die festgelegte Positionsgenauigkeit in der Regel nicht exakt erreicht werden kann. Mit dem Merkmal "im Wesentlichen erreicht werden kann" wird auch der Fall mit erfasst, dass im ersten Messplan ein Toleranzbereich definiert sein kann, der festlegt, bis zu welchen Abweichungen des Prüfergebnisses von der festgelegten Positionsgenauigkeit das Ergebnis noch als positiv zu bewerten ist.

Mit dem Merkmal "zu dem die erste, mobile Kommunikationseinrichtung das geografische Ziel im Wesentlichen erreicht" soll in Schritt f) der Realität Rechnung getragen werden, dass die mobile Kommunikationseinrichtung das geografische Ziel in der Regel nicht exakt erreichen kann. Mit dem Ausdruck "im Wesentlichen" wird insbesondere der Fall berücksichtigt, dass eine vorgegebene maximal erlaubte Strecke s zwischen der tatsächlichen Position der ersten, mobilen Kommunikationseinrichtung und dem festgelegten geografischen Ziel statistisch gesehen nicht überschritten wird, was zum Beispiel durch eine vorgegebene Irrtumswahrscheinlichkeit von x % und unter Kenntnis beider Positionen und deren Genauigkeiten durch einen statistischen Hypothesentest bekannter Weise prüfbar ist. Dieser Sachverhalt ist bei Verwendung eines herkömmlichen Navigationsgeräts bekannt, welches die Navigation zu einem gegebenen Ziel beendet, sobald das Navigationsgerät das gegebene Ziel innerhalb eines festgelegten Toleranzbereichs erreicht hat.

Bei der ersten, mobilen drahtlosen Kommunikationseinrichtung kann es sich beispielsweise um ein entsprechend ausgebildetes Smartphone handeln, welches vorteilhafter Weise eine Steuereinrichtung und eine Empfangseinrichtung zum Empfangen von Positionssignalen enthält. Die Steuereinrichtung ist insbesondere dazu ausgebildet, das Kartenbasierte Navigationsprogramm auszuführen, um einen Benutzer der ersten, mobilen Kommunikationseinrichtung zum vorbestimmten geografischen Ziel und, falls definiert, zu wenigstens einem vorbestimmten Zwischenziel führen zu können.

Eine Beobachtungsinformation ist als ein Beobachtungswert bzw. Messwert bezüglich eines Punktes oder zwischen mehreren Punkten und dessen Genauigkeit definiert. Im Falle normalverteilter Beobachtungen kann zum Beispiel die Streckenlänge zwischen zwei Punkten mit ihrer Standardabweichung eine Beobachtungsinformation sein. Bei den Punkten kann es sich vorzugsweise um die erste, mobile Kommunikationseinrichtung und wenigstens eine zweite Kommunikationseinrichtung oder um mehrere zweite Kommunikationseinrichtungen handeln. Eine Beobachtungsinformation kann beispielsweise Streckenlängen, Richtungsangaben oder Winkelangaben zwischen wenigstens zwei Kommunikationseinrichtungen definieren.

Eine mehrdimensionale Beobachtung, zum Beispiel eine 2D-Position (x, y) wird durch Hinzufügen ihrer 2*2 Varianz-Kovarianz-Matrix zu einer Beobachtungsinformation.

Eine Positionsinformation, welche beispielsweise aus dem von einem GNSS-Empfänger der ersten, mobilen Kommunikationseinrichtung und/oder einer zweiten Kommunikationseinrichtung empfangen Positionssignal ermittelt werden kann, definiert die Position der jeweiligen Kommunikationseinrichtung. Eine Positionsinformation enthält Positionskoordinaten und zusätzlich deren Genauigkeitsangaben. Zum Beispiel wird eine 3D-Position durch die Positionskoordinaten x, y und z und gegebenenfalls durch die dazugehörende, vollbesetzte 3*3-Varianz-Kovarianz-Matrix der drei Koordinaten definiert. In an sich bekannter Weise definiert und enthält eine Varianz-Kovarianz-Matrix alle Elemente, die zu einer eindeutigen Bestimmung des Fehlerhyperellipsoides einer 3D-Position oder zu einer eindeutigen Bestimmung des Gaußschen Fehlerellipsoids einer 2D-Position erforderlich sind

Das Merkmal "Information über den Zeitpunkt und/oder die Position der Durchführung des Messplans" gibt an, wann der Messplan durchgeführt werden soll. So kann die Information einen Zeitpunkt definieren, der angibt, dass der Messplan und somit die Erhebung der im Messplan festgelegten Messungen im Wesentlichen zum Zeitpunkt des Erreichens des festgelegten geografischen Ziels durchgeführt werden soll. In diesem Fall entsprechen die in Schritt f) berechneten aktuellen Positionskoordinaten der ersten, mobilen Kommunikationseinrichtung im Wesentlichen den Positionskoordinaten des festgelegten geografischen Ziels. Die Information kann alternativ oder zusätzlich auch die Position der Durchführung des Messplans festlegen. Sobald die erste, mobile Kommunikationseinrichtung die im Messplan festgelegte Position erreicht hat, wird der Messplan durchgeführt. Mit Hilfe der Karten basierten Navigationseinrichtung und eines Positionssignal-Empfängers kann die erste, mobile Kommunikationseinrichtung ihre Position zu jeder Zeit selbst ermitteln.

Alternativ kann die Information definieren, dass der Messplan zum Beispiel eine vorbestimmte Zeit vor dem wahrscheinlichen Erreichen des geografischen Ziels durchgeführt wird. In diesem Fall kann vor Ausführung des Optimierungsalgorithmus ein Extrapolationsmodell oder zusätzlich ein Bewegungsmodell genutzt werden, um die in Schritt e) gewonnenen aktuellen Positions- und/oder Beobachtungsinformationen für den Zeitpunkt des tatsächlichen Erreichens des geografischen Ziels zu korrigieren. Ein Bewegungsmodell, zum Beispiel in einem KALMAN-Filter repräsentiert, kann auch im Optimierungsalgorithmus mit berücksichtigt werden.

Der wenigstens im ersten Messplan definierte Messzeitpunkt und/oder die Messposition kann von der ersten, mobilen Kommunikationseinrichtung und/oder einer zentralen Kommunikationseinrichtung festgelegt werden.

Ein Vorteil des Verfahrens kann darin gesehen werden, dass zur richtigen Zeit und/oder am richtigen Ort die richtigen Messungen durchgeführt werden, um für den Zeitpunkt, zudem die erste, mobile Kommunikationseinrichtung das festgelegte geografische Ziel im Wesentlichen erreichen wird, die gewünschte Positionsgenauigkeit einhalten zu können.

Ein Vorteil des Verfahrens kann auch darin gesehen werden, dass zu den richtigen Zeiten und/oder an den richtigen Orten auf dem Weg zum Ziel zu unterschiedlichen Zeiten die richtigen Messungen durchgeführt werden, um für den Zeitpunkt, zu dem die erste, mobile Kommunikationseinrichtung das festgelegte geografische Ziel erreichen wird, die gewünschte Positionsgenauigkeit einhalten zu können.

Ein Vorteil des Verfahrens kann auch darin gesehen werden, dass vorab theoretisch geprüft werden kann, ob mit den maximal möglichen Messungen eine geforderte Positionsgenauigkeit überhaupt erreicht werden kann, oder welche Positionsgenauigkeit unter Einbezug welcher Beobachtungstypen und/oder welcher Zielen bestenfalls erreicht werden kann.

Um die Positionsbestimmung weiter verbessern zu können, kann vor Ausführung des Schrittes b) wenigstens eine zweite Kommunikationseinrichtung ermittelt werden, welche Positions- und/oder Beobachtungsinformationen bereitstellen kann. Die wenigstens zweite Kommunikationseinrichtung kann im ersten Messplan berücksichtigt werden, um in Schritt f) eine verbesserte Berechnung der Positionskoordinaten der ersten, mobilen Kommunikationseinrichtung und der Positionsgenauigkeit der wenigstens einen Positionskoordinate zu ermöglichen. Ob und für welche Messungen wenigstens eine zweite Kommunikationseinrichtung im Messplan berücksichtigt wird, wird anhand festlegbarer Kriterien von der ersten, mobilen Kommunikationseinrichtung und/oder einer zentralen Kommunikationseinrichtung entschieden.

Um die für einen Messplan geeigneten zweiten Kommunikationseinrichtungen ermitteln zu können, sollte die erste, mobile Kommunikationseinrichtung, oder, wie nachfolgend noch eingeführt, eine zentrale Kommunikationseinrichtung wissen, zu welchen Zeitpunkten welche zweite Kommunikationseinrichtungen erreichbar sind und welche Positions- und/oder Beobachtungsinformationen mit welchen Genauigkeiten die erreichbaren zweiten Kommunikationseinrichtungen zu den jeweiligen Zeitpunkten bereitstellen können. Hierzu können an sich bekannte Extrapolationsmodelle und/oder Bewegungsmodelle, wie zum Beispiel ein KALMAN-Filter, in Verbindung mit der Karten basierten Navigationseinrichtung genutzt werden indem eine Prognose der zukünftigen Positionen und ihrer Genauigkeiten erfolgt.

Bei den zweiten Kommunikationseinrichtungen kann es sich um mobile und/oder statische Kommunikationseinrichtungen handeln, welche eine drahtlose Schnittstelle aufweisen können. Eine statische Kommunikationseinrichtung kann eine stationäre Kommunikationseinrichtung, wie zum Beispiel ein Wi-Fi Access Point oder eine Basisstation eines Mobilfunknetzes sein. Als statische Kommunikationseinrichtung kann im Rahmen der Erfindung auch eine mobile Kommunikationseinrichtung erkannt werden, wenn sie sich für eine vorbestimmte Zeitspanne nicht bzw. statistisch betrachtet nicht bewegt hat. Als mobile zweite Kommunikationseinrichtungen können auch entsprechend ausgebildete Smartphones zum Einsatz kommen.

Die Ermittlung wenigstens einer zweiten Kommunikationseinrichtung findet vorzugsweise in der ersten, mobilen Kommunikationseinrichtung statt, wobei die Ermittlung in Abhängigkeit vorbestimmter Parameter und/oder Mess- und/oder Positionsinformationen durchgeführt werden kann. Als Parameter können beispielsweise der Abstand zwischen der ersten, mobilen Kommunikationseinrichtung und wenigstens einer zweiten Kommunikationseinrichtung und/oder die an der ersten, mobilen Kommunikationseinrichtung empfangene, von einer zweiten Kommunikationseinrichtung abgestrahlte Signalstärke sein.

Die von der ermittelten zweiten Kommunikationseinrichtung bereitgestellten Mess- und/oder Positionsinformationen können ebenfalls in Schritt f) vom Optimierungsalgorithmus berücksichtigt werden, um die Positionskoordinaten des festgelegten geografischen Ziels und die Positionsgenauigkeit der wenigstens einen Positionskoordinate zu ermitteln.

Insbesondere werden zweite Kommunikationseinrichtungen, welche einen Beitrag zur Positionsbestimmung der ersten, mobilen Kommunikationseinrichtung hinsichtlich des geografischen Ziels leisten können, von einem aktuellen Zeitpunkt an bis zum zukünftigen Zeitpunkt, zu dem die erste, mobile Kommunikationseinrichtung das festgelegte geografische Ziel erreichen wird, ermittelt.

Um für die Bewertung des ersten Messplans, aber auch für alle anderen im Rahmen der Erfindung erzeugten Messpläne, geeignete Testergebnisse liefern zu können, kann Schritt c) folgende Schritte enthalten:
Erstellung von simulierten Messungen, um Testpositions- und/oder Testbeobachtungsinformationen zu erhalten, und/oder
Auslesen vorab gespeicherter Testpositions- und/oder Testbeobachtungsinformationen, und
Ausführen eines Optimierungsalgorithmus auf die Testpositions- und/oder Testbeobachtungsinformationen, um die Testergebnisse zu liefern, und/oder
Auslesen vorab gespeicherter Testergebnisse.

Unter Testpositionsinformationen der ermittelten zweiten Kommunikationseinrichtungen versteht man vorzugsweise die Vorhersage von Positionsinformationen, und zwar beispielsweise aufgrund der Kenntnis der aktuellen Positionen und der Navigationsrouten, deren aktuelle und antizipierter zukünftiger Geschwindigkeiten, also dem Fortschritt entlang der Route und deren angenommene Positionsgenauigkeiten zu einem festgelegten Zeitpunkt.

Liegen die Testpositionsinformationen der ermittelten zweiten Kommunikationseinrichtung vor, so können unter Anderem aus diesen Testpositionsinformationen in Abhängigkeit eines ausgewählten Messtyps, zum Beispiel einer Streckenmessung oder einer Richtungsmessung, sowie der Methode der Messung, zum Beispiel einer Streckenmessung mit RSSI (Received Signal Strength Indication) oder RTT (Round Trip Time) die Testbeobachtungsinformationen abgeleitet werden. Danach können beispielsweise alle vorerst fehlerfrei berechneten Testpositions- und/oder Testbeobachtungsinformationen als ein geometrisches Netz gesehen werden. Für die Testpositionsinformationen können aber auch ihre gegebenen oder prognostizierten Positionsungenauigkeiten in einem späteren Optimierungsmodell zur Berechnung oder Schätzung von Positionsinformationen genutzt werden.

Bei dem zur Bewertung des ersten Messplans angewandten Optimierungsalgorithmus kann es sich um ein allgemeines Ausgleichungsverfahren für geometrische Netze oder auch um ein spezielles Ausgleichungsverfahren wie der freien Netzausgleichung handeln, welche dem Fachmann bekannt sind. Es können aber auch Bewegungsmodelle und Filtertechniken, wie der KALMAN-Filter, zusätzlich oder alternativ genutzt werden. Die Testpositions- und/oder Testbeobachtungsinformationen sind die Eingabewerte des Optimierungsalgorithmus, die bei Bedarf durch die Parameter von Bewegungsmodellen ergänzt werden können.

Vorzugsweise wird der erste Messplan mit Hilfe des gleichen Optimierungsalgorithmus - am besten mit statistisch basierten Auswerteverfahren für Netzausgleichungen - bewertet, mit welchem später nach der realen Durchführung des ersten Messplans die aktuellen Positionskoordinaten der ersten, mobilen Kommunikationseinrichtung und die aktuelle Positionsgenauigkeit der wenigstens einen Positionskoordinate basierend auf den durch reale Messungen gewonnenen Positions- und/oder Beobachtungsinformationen berechnet bzw. geschätzt werden.

Der erste Messplan kann aber auch mit ungenaueren, aber dafür schnelleren Methoden bewertet werden, so zum Beispiel mittels der Methode des einfachen Fehlerfortpflanzungsgesetzes (FFG).

Angemerkt sei, dass bei der Messplanerstellung und einem Optimierungsalgorithmus vorab gespeicherte Testpositions- und/oder Testbeobachtungsinformationen aus Historieninformationen und/oder Heuristiken abgeleitet worden sein können, um somit aus einer Vielzahl an potentiellen Zielen und/oder Messungen schnell eine geeignete Untermenge auswählen zu können.

In ähnlicher Weise können auch die bereits vorab gespeicherten Testergebnisse aus Historieninformationen und/oder Heuristiken abgeleitet worden sein können.

Um einen geeigneten Messplan aufstellen zu können, kann der erste Messplan in Schritt b) in Abhängigkeit vorbestimmter Kriterien aufgestellt werden, welche zum Beispiel definierte geografische Netzstrukturen und/oder eine vorbestimmte, einzuhaltende Irrtumswahrscheinlichkeit enthalten. Irrtumswahrscheinlichkeiten können für spätere Navigationsentscheidungen von Bedeutung sein, um dem Nutzer der ersten, mobilen Kommunikationseinrichtung zum Beispiel zu helfen zu erkennen, ob er das geografische Ziel erreicht hat.

Definierte geografische Netzstrukturen können in der ersten, mobilen Kommunikationseinrichtung gespeichert werden. Sie definieren im Wesentlichen die geografische Anordnung der ersten, mobilen Kommunikationseinrichtung und der wenigstens einen zweiten Kommunikationseinrichtung zum Zeitpunkt der Durchführung des ersten Messplans.

Ein Messplan kann auch ganz allgemeine geometrische Graphen-Formationen beschreiben, wie zum Beispiel eine Linie, eine Sternform, eine Sternform mit beliebig verbundenen Enden, beliebige Netze mit kreuzenden Linien. Eine Verbindungslinie eines Graphen zwischen zwei Kommunikationseinrichtungen kann ausdrücken, dass zwischen den beiden Kommunikationseinrichtungen eine geometrische Beziehung oder eine geometrischen Teilbeziehung besteht, wenn z. B. ein Winkel zwischen drei Kommunikationseinrichtungen gemessen werden soll.

Angemerkt sei an dieser Stelle, dass unter Messungen, nachfolgend auch Beobachtungen genannt, geometrische Beziehungen zwischen den Positionen der ermittelten zweiten Kommunikationseinrichtung untereinander und/oder zur ersten, mobilen Kommunikationseinrichtung angesehen werden. Die so erhaltenen Positions- und/oder Messinformationen werden dann, wie bereits erwähnt, unter Anwendung eines Optimierungsalgorithmus, welches vorzugsweise auf dem Modell der geometrischen Netzausgleichung basiert, ausgeglichen.

Dem Fachmann sind jedoch weitere Modelle bekannt.

Neben den bereits definierten geografischen Netzstrukturen kann das Aufstellen des Messplans in Schritt b) auch in Abhängigkeit von a priori bekannten Historien Informationen und gegebenenfalls auch heuristischen Erkenntnissen aufgestellt werden, wobei diese Informationen auch Gebietsspezifisch sein können und durch aktuellere Erkenntnisse korrigiert werden können.

Zur Aufstellung eines geeigneten Messplans ist es vorteilhaft, zu wissen, welche Messungen wann durchgeführt werden sollen, und welche Genauigkeiten erzielt werden können. Dies wird vorzugsweise dadurch erreicht, dass die ermittelten zweiten Kommunikationseinrichtungen ihre Mess- und Anmesseigenschaften kennen und diese vorzugsweise der ersten, mobilen Kommunikationseinrichtung, oder einer zentralen Kommunikationseinrichtung mitteilen.

Allgemein gesprochen benötigt das Verfahren zur Aufstellung eines geeigneten Messplans vorzugsweise Angaben darüber, welche zweiten Kommunikationseinrichtungen sich zu welchem Zeitpunkt mit welcher Genauigkeit wo befinden. Hierzu können geeignete Extrapolationsmodelle genutzt werden.

Ein geeignetes Modell ist beispielsweise ein KALMAN-Filter, welcher zur Positionsberechnung eingesetzt werden kann. Ein KALMAN-Filter kann die aktuelle Positionsinformation auch in Abhängigkeit der zeitlichen vorherigen Positionsinformationen jeweiligen zweiten Kommunikationseinrichtung bestimmen.

Um die Positionskoordinaten der ersten, mobilen Kommunikationseinrichtung und die Positionsgenauigkeit wenigstens der einen Positionskoordinate beim Erreichen des geografischen Ziels genauer berechnen oder schätzen zu können, können in Schritt b) mehrere Messpläne erstellt werden. Zudem kann
Schritt c) folgende Schritte enthalten:
Liefern, unter Ansprechen auf jeden ersten Messplan, von jeweiligen Testergebnissen bezüglich der Positionskoordinaten des festgelegten geografischen Ziels und der Positionsgenauigkeit der wenigstens einen Positionskoordinate. In Schritt d) kann unter Ansprechen auf die Testergebnisse des jeweiligen ersten Messplans geprüft werden, ob bei der Durchführung des jeweiligen ersten Messplans die in Schritt a) festgelegte Positionsgenauigkeit im Wesentlichen erreicht werden kann. Schließlich kann ein erster Messplan in Abhängigkeit vorbestimmter Kriterien ausgewählt werden.

Die Auswahl eines Messplans aus mehreren potentiell zielführenden Messplänen kann verschiedenen, vorab festgelegten Kriterien unterliegen. Solche Kriterien können z. B. die Wahrscheinlichkeit der Durchführbarkeit von im jeweiligen Messplan enthaltenen Messungen, die Einhaltung ihrer angenommenen Messgenauigkeiten, der Energieaufwand der beteiligten Kommunikationseinrichtungen für die Messungen, die Wahrscheinlichkeit des Zutreffens der angenommenen Genauigkeiten der Positionsinformationen der beteiligten Kommunikationseinrichtungen, eine ausreichende geometrische Netzgeometrie der beteiligten Kommunikationseinrichtungen und Messungen zwischen den Kommunikationseinrichtungen sein, um fehlerhafte Messungen mit statistischen Methoden als Ausreißer aufdecken und somit eliminieren zu können. Ein zusätzliches Kriterium kann neben der Genauigkeit der Positionsbestimmung der ersten, mobilen Kommunikationseinrichtung auch zusätzlich eine zu erfüllende Bedingung an die Genauigkeiten der Positionsbestimmungen der beteiligten zweiten Kommunikationseinrichtungen sein.

In der Regel wird man aber nicht zu viele verschiedene Messpläne erstellen und dann bewerten wollen, da diese Bewertung Rechenzeit und Energie benötigt und insbesondere bei einer zeitlichen Abfolge von verschiedenen Messplänen auf unterschiedlichen Positionen bei der späteren realen Anwendung Abweichungen zu den getroffenen Annahmen zu erwarten sind.

Diese Kriterien werden vorzugsweise in der ersten, mobilen Kommunikationseinrichtung oder einer zentralen Kommunikationseinrichtung bei der Auswahl eines geeigneten Messplans geprüft.

Bei dem beispielhaften Kriterium, die Wahrscheinlichkeit der Durchführbarkeit von Messungen bei der Auswahl eines Messplans zu berücksichtigen, können Bewegungsmodelle, wie zum Beispiel der KALMAN-Filter berücksichtigt werden. Mit dessen Hilfe und/oder zusätzlicher Routeninformation zum Beispiel ermittelt werden kann, welche zweiten Kommunikationseinrichtungen zu welchem Zeitpunkt für die Messung von Positions- und/oder Beobachtungsinformationen der ersten, mobilen Kommunikationseinrichtung und/oder einer zentralen Kommunikationseinrichtung zur Verfügung gestellt werden können. Beispielsweise kann auf diese Weise erkannt werden, dass in einem Messplan Messungen zwischen Kommunikationseinrichtungen erhoben werden sollen, die sich jedoch zum Zeitpunkt des Erreichens des festgelegten geografischen Ziels mit einer vorbestimmten Wahrscheinlichkeit in einem Funkloch befinden werden. Dieser Messplan wird dann verworfen.

Die Festlegung eines weitgehend optimierten Messplans schließt auch ein, dass die erste, mobile Kommunikationseinrichtung und/oder eine zentrale Kommunikationseinrichtung die zu beteiligenden zweiten Kommunikationseinrichtungen bestimmen kann, indem die dazu erforderlichen Informationen, wie zum Beispiel Positions- und/oder Beobachtungsinformationen vorab erhoben und abgespeichert werden.

Für den Fall, dass in Schritt f) festgestellt wird, dass die berechnete Positionsgenauigkeit außerhalb eines vorbestimmten Toleranzbereichs bezüglich der festgelegten Positionsgenauigkeit liegt, d.h. schlechter als die festgelegte Positionsgenauigkeit ist, können die Schritte b) bis f) in Echtzeit so lange wiederholt werden, bis die berechnete Positionsgenauigkeit der wenigstens einen Positionskoordinate innerhalb des vorbestimmten Toleranzbereichs liegt. Dieses Verfahren wird in der Geodäsie auch als Aufdatierung bezeichnet, was einer Neuberechnung beziehungsweise Aktualisierung der Werte entspricht. Der vorbestimmte Toleranzbereich kann insbesondere als eine Unschärfe betrachtet werden, welche von einem statistischen Test genutzt werden kann, um feststellen zu können, ob die berechnete Positionsgenauigkeit innerhalb oder außerhalb einer vorbestimmte Unschärfe liegt, welche z. B. durch eine vorbestimmte Fehlerquote ausgedrückt werden kann.

Modelle zu den zuvor erwähnten Aufdatierungen sind hinlänglich bekannt. Bei der vorliegenden Aufdatierung erfolgt die Verbesserung der berechneten Ergebnisse in Echtzeit, das heißt, dass die neu erstellten Messpläne vernachlässigbar später als der erste in Schritt e) durchgeführte erste Messplan durchgeführt werden und nur die zusätzlichen Messungen verarbeitet werden müssen, da die Nullstelle der Linearisierung im ersten Schritt der iterativen Berechnung identisch ist. In den weiteren iterativen Berechnungsschritten können bei realen Messungen dann alle Beobachtungen aufgrund einer neuen Nullstelle angepasst werden.

Wenn z. B. mit einer Frequenz von 1 Hz Positionsinformationen für eine Fußgängernavigation benötigt werden und z. B. ein KALMAN Filter zur Positionsberechnung eingesetzt wird, der die aktuelle Positionsinformation auch in Abhängigkeit der zeitlich vorherigen Positionsinformation bestimmt, so folgt daraus, dass eine Positionsinformation in Zukunft von mehreren zeitlich vorher, aber nacheinander erstellten und zeitlich nacheinander durchgeführten Messplänen und deren zeitlich nacheinander durchgeführten Auswertungen abhängig ist.

Hieraus folgt, dass zum aktuellen Zeitpunkt, zu dem ein erstes geografisches Zwischenziel erreicht wird, nicht nur ein erster Zusatzmessplan, sondern ggf. auch der Messzeitpunkt für folgende Zusatzmesspläne sowie dem ersten Messplan zu bestimmen ist, falls eine geeignete Sequenz von zeitlich nacheinander durchzuführenden Messplänen benötigt wird. Die Herleitung dieser Sequenz von Messplänen erfolgt schrittweise nach dem gleichen Prinzip der Herleitung des ersten Messplans.

Zu diesem Zweck kann das Verfahren vorsehen, dass
- in Schritt a) ferner die Positionskoordinaten wenigstens eines geografischen Zwischenziels der ersten, mobilen Kommunikationseinrichtung und für wenigstens eine der Positionskoordinaten des wenigstens einen geografischen Zwischenziels eine Positionsgenauigkeit festgelegt werden;
- in Schritt b) für das wenigstens eine geografische Zwischenziel ein zweiter Messplan zum Gewinnen von Positionsinformationen, welche Positionskoordinaten und deren Genauigkeit enthalten, und/oder von Beobachtungsinformationen, welche Beobachtungswerte und deren Genauigkeiten enthalten, aufgestellt wird, wobei der zweite Messplan Angaben über zu erhebenden Messungen und eine Information über den Zeitpunkt und/oder die Position der Durchführung des zweiten Messplans enthält;
- in Schritt c) unter Ansprechen auf den zweiten Messplan Testergebnissen bezüglich der Positionskoordinaten des festgelegten geografischen Zwischenziels und der Positionsgenauigkeit der wenigstens einen Positionskoordinate geliefert werden;
- in Schritt d) unter Ansprechen auf die Testergebnisse geprüft wird, ob bei der Durchführung des zweiten Messplans die festgelegte Positionsgenauigkeit für das festgelegte geografische Zwischenziel im Wesentlichen erreicht werden kann und wenn ja, unter Ansprechen auf diese Testergebnisse ferner geprüft wird, ob bei der Durchführung des ersten Messplans die festgelegte Positionsgenauigkeit für das festgelegte geografische Ziel im Wesentlichen erreicht werden kann; wenn ja, wird
- in Schritt e) der zweite Messplan in Abhängigkeit von der im zweiten Messplan enthaltenen Information über den Zeitpunkt und/oder die Position durchgeführt, indem das Erheben der im zweiten Messplan enthaltenen Messungen veranlasst wird, um aktuelle Positions- und/oder Beobachtungsinformationen zu gewinnen; und
- in Schritt f) wird ein Optimierungsalgorithmus, vorzugsweise auf der Grundlage einer geometrischen Netzausgleichung, in Abhängigkeit von den in Schritt e) gewonnenen aktuellen Positions- und/oder Beobachtungsinformationen ausgeführt, um die Positionskoordinaten der ersten, mobilen Kommunikationseinrichtung und die Positionsgenauigkeit der wenigstens einen Positionskoordinate für den Zeitpunkt zu berechnen, zu dem die erste, mobile Kommunikationseinrichtung das geografische Zwischenziel im Wesentlichen erreicht.

In Schritt d) kann somit nicht nur geprüft werden, ob das für den jeweiligen zweiten Messplan vorgegebene Gütekriterium an dem jeweiligen geografischen Zwischenziel eingehalten oder im Wesentlichen eingehalten werden kann, sondern auch, ob mit dem zweiten Messplan die ausreichenden Voraussetzungen geschaffen wurden, um für das zeitlich spätere geografische Ziel die vorbestimmten Güte-Kriterien hinsichtlich der Positionskoordinaten des vorbestimmten geografischen Ziels und der vorgegebenen Positionsgenauigkeit zu erreichen.

Fällt das Prüfergebnis in Schritt d) negativ aus, können die Schritte b) bis d) wiederum solange wiederholt werden, bis ein positives Prüfergebnis erreicht wird.

Wiederum kann vor Ausführung des Schritts b) wenigstens eine zweite Kommunikationseinrichtung ermittelt werden, welche Positions- und/oder Beobachtungsinformationen bereitstellen und im jeweiligen zweiten Messplan berücksichtigt werden kann, um in Schritt f) eine verbesserte Berechnung der Positionskoordinaten der ersten, mobilen Kommunikationseinrichtung und der Positionsgenauigkeit der wenigstens einen Positionskoordinate zu ermöglichen, und zwar zu dem Zeitpunkt, zu welchem die erste, mobile Kommunikationseinrichtung das jeweilige Zwischenziel im Wesentlichen erreicht hat.

Vorzugsweise enthält bei einer sequentiellen Durchführung von Messplänen Schritt c) ferner folgende Schritte: Erstellen von simulierten Messungen, um Testpositions- und/oder Testbeobachtungsinformationen zu erhalten, und/oder
Auslesen vorab gespeicherter Testpositions- und/oder Testbeobachtungsinformationen, und
Ausführen eines Optimierungsalgorithmus auf die Testpositions- und/oder Testbeobachtungsinformationen, um die Testergebnisse zu liefern, und/oder
Auslesen vorab gespeicherter Testergebnisse.

Eine sequentielle Durchführung von mehreren Messplänen auf mehreren nacheinander erreichten Positionen eines antizipierten Weges ist unter Anderem auch dann sinnvoll, wenn Bewegungsmodelle, die zum Beispiel eine beschränkte Beschleunigungsänderung während eines Zeitintervalls erfassen, Auswertemodelle, die zum Beispiel mittels des KALMAN-Filters eine Abhängigkeit der Positionsgenauigkeit von vorhergehenden Positionsgenauigkeiten bedingen, und vorzugsweise ausreichend genaue Bewegungsprognosen und Positionsgenauigkeiten vorliegen.

Zweite Messpläne bzw. Zusatzmesspläne für Zwischenziele können auch dann besonders sinnvoll sein, wenn auf der Navigationsroute der ersten, mobilen Kommunikationseinrichtung zum festgelegten geometrischen Ziel beispielsweise Flurkorridore oder Abbiegungen passiert oder sich ihnen angenähert wird, da insbesondere dann potentiell entweder zusätzliche bewegliche zweite Kommunikationseinrichtungen als Ziele hinzukommen oder potentiell eine höhere Positioniergenauigkeit notwendig sein wird.

In Schritt a) können die Positionskoordinaten des geografischen Ziels, und/oder die Positionsgenauigkeit für die wenigstens eine Positionskoordinate des geografischen Ziels, und/oder die Positionskoordinaten des geografischen Zwischenziels, und/oder die Positionsgenauigkeit für die wenigstens eine Positionskoordinate des geografischen Zwischenziels manuell an der ersten, mobilen Kommunikationseinrichtung eingegeben oder automatisch von der ersten, mobilen Kommunikationseinrichtung festgelegt werden.

So kann beispielsweise die erste, mobile Kommunikationseinrichtung ein geografisches Ziel in Abhängigkeit von einem geografischen Wunsch des Benutzers automatisch festlegen. So ist denkbar, dass der Nutzer der ersten, mobilen Kommunikationseinrichtung den Wunsch eingibt, in einem italienischen Restaurant in der näheren Umgebung zu essen. Mit Hilfe des Karten basierten Navigationsprogramms kann die erste, mobile Kommunikationseinrichtung dann das geografische Ziel sowie mögliche hilfreiche geografische Zwischenziele und die erforderlichen Positionsgenauigkeiten selbst festlegen.

Eine effiziente Ausführungsform sieht vor, dass die Verfahrensschritte a) bis f) unter Steuerung der ersten, mobilen Kommunikationseinrichtung ausgeführt werden.

Um den Energiebedarf der ersten, mobilen Kommunikationseinrichtung bei der Ausführung des Verfahrens zu reduzieren, können die Schritte b) bis d) auch in einer zentralen Kommunikationseinrichtung ausgeführt werden. In diesem Fall wird der in der zentralen Kommunikationseinrichtung aufgestellte und positiv geprüfter erster Messplan und, wenn vorhanden, der wenigstens eine zusätzlich aufgestellte und positiv geprüfte zweite Messplan zum Zwecke der Durchführung zur ersten, mobilen Kommunikationseinrichtung übertragen.

Vorteilhafter Weise werden dann Positions- und/oder Beobachtungsinformationen, welche aus den von der wenigstens einen zweiten Kommunikationseinrichtung erhobenen Messungen gewonnen werden, zur mobilen Kommunikationseinrichtung und/oder zu der zentralen Kommunikationseinrichtung übertragen.

Vorteilhafter Weise werden die im ersten und/oder zweiten Messplan enthaltenen Informationen über den Zeitpunkt und/oder den Ort der Durchführung des jeweiligen Messplans von der ersten Kommunikationseinrichtung und/oder der zentralen Kommunikationseinrichtung erzeugt.

Der Optimierungsalgorithmus kann auf einer geografischen Netzausgleichung, insbesondere einer freien Netzausgleichung, und/oder Bewegungsmodellen und/oder Filtertechniken basieren.

Das oben genannte technische Problem wird ebenfalls mit den Merkmalen des Anspruchs 16 gelöst.

Danach ist ein Positionsbestimmungssystem zur Positionsbestimmung einer mobilen Kommunikationseinrichtung unter Verwendung eines Messplans vorgesehen. Das Positionsbestimmungssystem weist ein Positionierungssystem, zum Beispiel ein GNSS-System, insbesondere ein GPS-System auf. Ferner ist eine erste, mobile Kommunikationseinrichtung vorgesehen, welche folgende Merkmale aufweist:
eine drahtlose Empfangseinrichtung, die dazu ausgebildet ist, Positionssignale von dem Positionierungssystem zu empfangen, um die eigene Position und deren Genauigkeit bestimmen zu können,
eine erste Speichereinrichtung, in welcher die Positionskoordinaten eines vorbestimmten geografischen Ziels, welches die erste, mobile Kommunikationseinrichtung zu einem zukünftigen Zeitpunkt erreichen wird, und
wenigstens für eine der Positionskoordinaten des geografischen Ziels eine vorbestimmte Positionsgenauigkeit speicherbar sind,
eine zweite Speichereinrichtung, in welcher ein Karten basiertes Navigationsprogramm gespeichert ist.

Die erste, mobile Kommunikationseinrichtung weist ferner eine programmierbare Steuereinrichtung auf, die dazu ausgebildet ist,
- das Karten basierte Navigationsprogramm auszuführen, um einen Benutzer der ersten, mobilen Kommunikationseinrichtung zum vorbestimmten geografischen Ziel, und, sofern vorhanden, zu wenigstens einem vorbestimmten geografischen Zwischenziel führen zu können,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der erste Messplan Angaben über zu erhebenden Messungen und eine Information über den Zeitpunkt und/oder eine zu erreichende Position der Durchführung des Messplans enthält,
- unter Ansprechen auf den Messplan das Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann,
- das Durchführen des Messplans in Abhängigkeit von der im Messplan enthaltenen Information über den Zeitpunkt und/oder die Position der Durchführung zu steuern, um aktuelle Positions- und/oder Beobachtungsinformationen zu gewinnen, und
- einen Optimierungsalgorithmus in Abhängigkeit von den gewonnenen aktuellen Positions- und/oder Beobachtungsinformationen auszuführen, um die Positionskoordinaten der ersten, beweglichen Kommunikationseinrichtung und die Positionsgenauigkeit der wenigstens einen Positionskoordinate für den Zeitpunkt zu berechnen, zu dem die erste mobile Kommunikationseinrichtung das geografische Ziel erreicht.

Das Positionsbestimmungssystem kann mehrere zweite drahtlose Kommunikationseinrichtungen aufweisen, welche jeweils dazu ausgebildet sind Positionsinformationen und/oder Beobachtungsinformationen zu ermitteln und diese zur ersten, mobilen Kommunikationseinrichtung zu übertragen. Positionsinformationen enthalten vorteilhafter Weise die Positionskoordinaten und deren Genauigkeiten hinsichtlich der Position der jeweiligen zweiten drahtlosen Kommunikationseinrichtung zu einem bestimmten Gültigkeitszeitpunkt. Die Beobachtungsinformationen definieren die relative Lage und deren Genauigkeit zwischen zwei Kommunikationseinrichtungen zu einem Gültigkeitszeitpunkt. Die erste, mobile Kommunikationseinrichtung weist ferner eine drahtlose Kommunikationsschnittstelle auf, die dazu ausgebildet ist Positionsinformationen und/oder Beobachtungsinformationen von wenigstens einer der zweiten Kommunikationseinrichtung zu empfangen und/oder zu wenigstens einer der zweiten Kommunikationseinrichtungen zu übertragen. Die Steuereinrichtung der ersten, mobilen Kommunikationseinrichtung ist ferner dazu ausgebildet, wenigstens eine der zweiten Kommunikationseinrichtungen zu ermitteln, welche Positions- und/oder Beobachtungsinformationen bereitstellen und in dem Messplan berücksichtigt werden kann, um eine verbesserte Berechnung der Positionskoordinaten der ersten, beweglichen Kommunikationseinrichtung und der Positionsgenauigkeit der wenigstens einen Positionskoordinate zu ermöglichen.

Das Positionsbestimmungssystem kann eine zentrale Kommunikationseinrichtung aufweisen, welche eine drahtlose Empfangseinrichtung aufweist, die dazu ausgebildet ist, Positionsinformationen und/oder Beobachtungsinformationen von wenigstens einer der zweiten Kommunikationseinrichtung und/oder der ersten, mobilen Kommunikationseinrichtung sowie das vorbestimmte geografische Ziel der ersten, mobilen Kommunikationseinrichtung und die vorbestimmte Positionsgenauigkeit der wenigstens einen Positionskoordinate des geografischen Ziels zu empfangen.

Ferner weist die zentrale Kommunikationseinrichtung eine Steuereinrichtung auf, die dazu ausgebildet ist, wenigstens eine der zweiten Kommunikationseinrichtungen zu ermitteln, welche Positions- und/oder Beobachtungsinformationen bereitstellen und im Messplan berücksichtigt werden kann, um eine verbesserte Berechnung der Positionskoordinaten der ersten, beweglichen Kommunikationseinrichtung und der Positionsgenauigkeit der wenigstens einen Positionskoordinate zu ermöglichen. Die Steuereinrichtung ist ferner dazu ausgebildet, die Aufstellung eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der erste Messplan Angaben über zu erhebenden Messungen und eine Information über den Zeitpunkt und/oder die Position der Durchführung des Messplans enthält.

Ferner steuert die Steuereinrichtung unter Ansprechen auf den Messplan das Liefern von Testergebnissen bezüglich der Positionskoordinaten des festgelegten geografischen Ziels und der Positionsgenauigkeit der wenigstens einen Positionskoordinate.

Unter Ansprechen auf die Testergebnisse prüft sie, ob bei der Durchführung des Messplans die vorbestimmte Positionsgenauigkeit im Wesentlichen erreicht werden kann.

Die zentrale Kommunikationseinrichtung ist dazu ausgebildet, einen aufgestellten und positiv geprüften Messplan zur ersten, mobilen Kommunikationseinrichtung zu übertragen.

An dieser Stelle sei angemerkt, dass als erste, mobile Kommunikationseinrichtung eine Kommunikationseinrichtung bezeichnet wird, für die eine Position hinsichtlich eines festgelegten geografischen Ziels unter Einhaltung einer vorgegebenen Positionsgenauigkeit bestimmt werden soll. Bei den zweiten Kommunikationseinrichtungen handelt es sich um Einrichtungen, welche geeignete Messwerte liefern kann, mit denen eine Positionsbestimmung verbessert werden können.

Im Rahmen der Erfindung kann auch die erste, mobile Kommunikationseinrichtung als zweite Kommunikationseinrichtung fungieren, wenn eine andere zweite Kommunikationseinrichtung als mobile Kommunikationseinrichtung tätig ist, für die Position und deren Genauigkeit hinsichtlich eines festgelegten geografischen Ziels und/oder Zeitpunktes berechnet werden soll.

Das oben genannte technische Problem wird ebenfalls durch die Merkmale des Anspruchs 19 gelöst.

Danach ist eine mobile Kommunikationseinrichtung vorgesehen, welche eine drahtlose Empfangseinrichtung aufweist, die dazu ausgebildet ist, Positionssignale von einem Positionierungssystem zu empfangen, um die eigene Position und gegebenenfalls deren Genauigkeit bestimmen zu können. Ferner enthält die mobile Kommunikationseinrichtung eine erste Speichereinrichtung, in welcher die Positionskoordinaten wenigstens eines vorbestimmten geografischen Ziels, welches die mobile Kommunikationseinrichtung zu einem zukünftigen Zeitpunkt im Wesentlichen erreichen wird, und in welcher wenigstens für eine der Positionskoordinaten des vorbestimmten geografischen Ziels eine vorbestimmte Positionsgenauigkeit speicherbar sind,
eine zweite Speichereinrichtung, in welcher ein Karten basiertes Navigationsprogramm speicherbar ist, und eine Steuereinrichtung. Die Steuereinrichtung ist dazu ausgebildet,
- das Karten basierte Navigationsprogramm auszuführen, um einen Benutzer der mobilen Kommunikationseinrichtung zum vorbestimmten geografischen Ziel führen zu können,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der erste Messplan Angaben über zu erhebenden Messungen und eine Information über den Zeitpunkt und/oder die Position der Durchführung des Messplans enthält,
- unter Ansprechen auf den Messplan das Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann,
- das Durchführen des Messplans in Abhängigkeit von der im Messplan enthaltenen Information über den Zeitpunkt und/oder die Position der Durchführung zu steuern, um aktuelle Positions- und/oder Beobachtungsinformationen zu gewinnen, und
- einen Optimierungsalgorithmus in Abhängigkeit von den gewonnenen aktuellen Positions- und/oder Beobachtungsinformationen auszuführen, um die Positionskoordinaten der mobilen Kommunikationseinrichtung und die Positionsgenauigkeit der wenigstens einen Positionskoordinate zu berechnen, und zwar insbesondere zu dem Zeitpunkt, zu dem die mobile Kommunikationseinrichtung das vorbestimmte geografische Ziel erreicht.

Um mit anderen Kommunikationseinrichtungen kommunizieren zu können, weist die mobile Kommunikationseinrichtung eine drahtlose Kommunikationsschnittstelle auf, die dazu ausgebildet ist, Positionsinformationen und/oder Beobachtungsinformationen von wenigstens einer anderen Kommunikationseinrichtung zu empfangen und/oder zu wenigstens einer anderen Kommunikationseinrichtung auszusenden,
wobei die Steuereinrichtung dazu ausgebildet ist, wenigstens eine der anderen Kommunikationseinrichtungen zu ermitteln, welche Positions- und/oder Beobachtungsinformationen bereitstellen und im Messplan berücksichtigt werden kann, um eine verbesserte Berechnung der Positionskoordinaten der mobilen Kommunikationseinrichtung und der Positionsgenauigkeit der wenigstens einen Positionskoordinate zu ermöglichen.

Das oben genannte technische Problem wird auch durch ein Computerprogramm gelöst, welches eine Vielzahl von Anweisungen enthält, die in mehreren drahtlosen Kommunikationseinrichtungen, von denen wenigstens eine als mobile Kommunikationseinrichtung ausgebildet ist, speicherbar sind, wobei die Anweisungen, wenn sie von einer Steuereinrichtung der wenigstens einen mobilen Kommunikationseinrichtung ausgeführt werden, das Verfahren nach einem der Ansprüche 1 bis 15 steuern.

Vorteilhafter Weise sind zumindest einige der Anweisungen des Computerprogramms auch in weiteren Kommunikationseinrichtungen gespeichert und mittels einer Steuereinrichtung zur Steuerung des Verfahrens ausführbar.

Die Erfindung hat den Vorteil, dass für wenigstens einen geeigneten Zeitpunkt und/oder für wenigstens einen geeigneten Ort, jeweils ein Messplan aufgestellt werden kann, mit dessen Hilfe geeignete Messungen durchgeführt werden können, um für das vorgegebene, zukünftige geografische Ziel der ersten, mobilen Kommunikationseinrichtung die gewünschte Positioniergenauigkeit bereitstellen zu können. Dies kann bei möglichst geringem Energieverbrauch und/oder geringem Kommunikationsaufkommen und ggf. bei maximaler Unterstützung benachbarter Kommunikationseinrichtungen erreicht werden. Die Erfindung hat auch den Vorteil, dass erkannt wird, dass Zusatzmessungen, d.h. zweite Messpläne bzw. Zusatzmesspläne für Zwischenziele bereits vor dem Erreichen des geografischen Ziels zwingend notwendig sein können, um die Genauigkeit im geografischen Ziel zu erreichen oder dass die Erfindung die notwendigen Messungen über einen Zeitraum und/oder einen Bewegungsfortschritt geeignet verteilen kann, um somit vorgegebene Kriterien einhalten zu können.

Für jeden zu erstellenden Messplan, das kann der erste und gegebenenfalls jeder zweite Messplan sein, wird ein Zeitpunkt und/oder Ort definiert, zu dem die Messungen durchzuführen sind und zu dem bereits vorab bestimmte Schätzwerte, die aus Bewegungsmodellen gewonnen werden können, gelten oder für den sie extrapoliert werden. Die Erstellung eines Messplans hängt von der Zielsetzung des Messplans ab. Zu erreichende Kriterien durch den Messplan sind gebunden an eine vorgegebene Position und eine vorgegebene Positionsgenauigkeit und oft zusätzlich gebunden u. a. an eine vorbestimmte Genauigkeit einer Richtung, zum Beispiel der aktuellen Bewegungsrichtung oder einer Navigationsrichtung zu einer vorgegebenen Zielkoordinate.

Für die theoretische Bewertung, d.h. Simulation des jeweiligen Messplans werden auch die Positionen und Positionsgenauigkeiten der an den Messungen beteiligten zweiten Kommunikationseinrichtungen für den jeweiligen Zeitpunkt und/oder Ort benötigt. Die aus der Simulation der gewonnenen Testpositions- und/oder Testbeobachtungsinformationen gelten somit zu einem fiktiven Zeitpunkt und für eine spezielle Soll-Position.

In der Realität existiert ein solcher Zeitpunkt aber i.d.R. nicht, da zum Beispiel der reale Weg oder die Bewegungsgeschwindigkeit der ersten, beweglichen Kommunikationseinrichtung nicht eingehalten oder die Position und/oder andere Kriterien nicht exakt eingehalten werden. Die Festlegung des korrespondierenden realen Zeitpunkts, zu dem der jeweilige Messplan real durchgeführt wird, erfolgt später von dem auszuführenden Computerprogramm zur Beauftragung und Durchführung der Messungen, wobei dieses Programm an Hand von vorgegeben Toleranzwerten für die Einhaltung der Kriterien des Messplans entscheidet, ob der aktuelle Zeitpunkt ausreichend genau die Kriterien einhält. Um auch auf nicht ausreichend genau eingehaltene Kriterien vorbereitet zu sein, können zu einem ersten Messplan bereits vorab Zusatzmesspläne bzw. zweite Messpläne erstellt werden und genutzt werden oder später zusätzlich erstellt werden und/oder rechtzeitig vollständig neue Messpläne erstellt werden. Im weiteren Text wird vereinfachend oft nur vom Zeitpunkt eines Messplans gesprochen und nicht zusätzlich auf die i. d. R. notwendige Differenzierung zwischen fiktivem und realen Zeitpunkt eingegangen.

Die Kriterien, die ein in einer Auswertung, z. B. in einer Netzausgleichung, genutzter realer Messplan einzuhalten hat, sind vom Zweck einer Positionierungsbestimmung und/oder Orientierungsbestimmung und/oder Navigation der Kommunikationseinrichtung und deren benötigten Genauigkeiten abhängig. Als Beispiel sei genannt, dass die ersten mobile Kommunikationseinrichtung eine spezielle von mehreren benachbarten Türen mit einer Irrtumswahrscheinlichkeit von 0,3 % richtig ansteuert, wobei 0,3 % die Wahrscheinlichkeit angibt, mit der eine falsche Tür erreicht wird, sofern ab diesem Zeitpunkt der Soll-Weg zum Ziel und die aktuelle Genauigkeit der Positionsbestimmung bis zum Ziel konstant eingehalten wird. Ein zu erstellender Messplan und die nachfolgende simulierte Auswertung zur Positionsbestimmung und/oder Unterschreitung einer vorgegebenen Irrtumswahrscheinlichkeit gelten somit zu und/oder entsprechend angepasst ab einem definierten fiktiven Zeitpunkt. Für den korrespondierenden Zeitpunkt der späteren realen Durchführung der Messungen eines Messplan gilt,
a) dass die Durchführung realer Messungen eines Messplans entweder zu einem fest vorgegebenen Zeitpunkt erfolgt und somit der reale Zeitpunkt ausreichend identisch zu dem fiktiven Zeitpunkt der Simulation des Messplans ist, oder
b) dass der Zeitpunkt der realen Durchführung der Messungen eines Messplans von einem Computerprogramm bestimmt wird, wobei das Programm vorab definierte Kriterien prüft, um zu entscheiden, ob die angenommene Situation für einen Messplan (können z.B. die Messungen wegen Abschattungen durchgeführt werden) und für den positiven Effekt durch den Messplan genau genug eingehalten werden kann. Dieses wird z. B. insbesondere durch das Kriterium Erreichen einer vorgegebenen Position und/oder z. B. die Kriterien Einhaltung der Bewegungsrichtung und/oder Einhaltung der bisherigen oder prognostizierten zukünftigen Überschreitung von vorgegebenen Irrtumswahrscheinlichkeiten für spätere Navigationsentscheidungen entschieden.

Die Erfindung wird nachfolgend anhand mehrerer Ausführungsbeispiele in Verbindung mit den beiliegenden Zeichnungen näher erläutert. Es zeigen:
- Fig. 1: eine bewegliche, drahtlose Kommunikationseinrichtung gemäß der Erfindung,
- Fig. 2: eine zentrale, drahtlose Kommunikationseinrichtung gemäß der Erfindung,
- Fig. 3: ein beispielhaftes Positionsbestimmungssystem mit der in Fig. 1 gezeigten Kommunikationseinrichtung, und
- Fig. 4: ein alternatives Positionsbestimmungssystem.

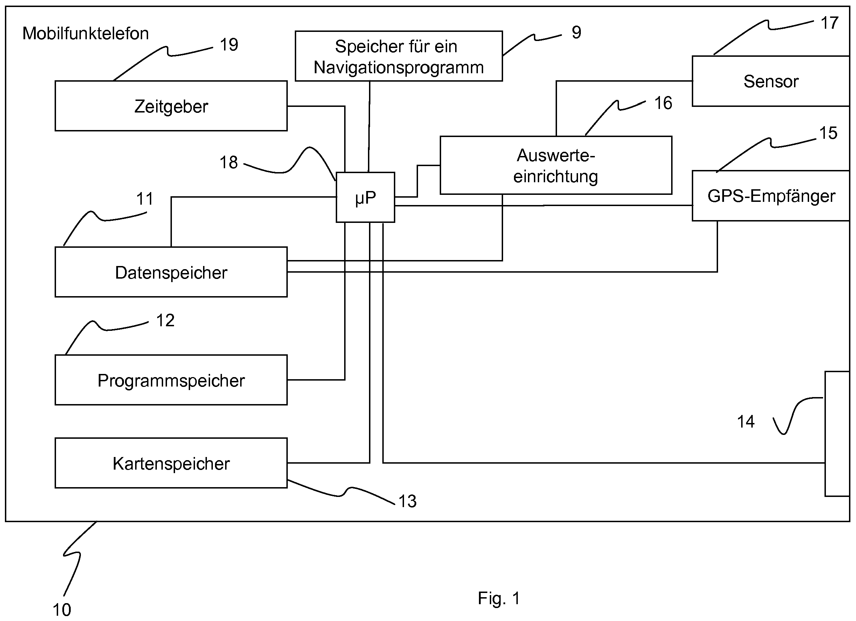

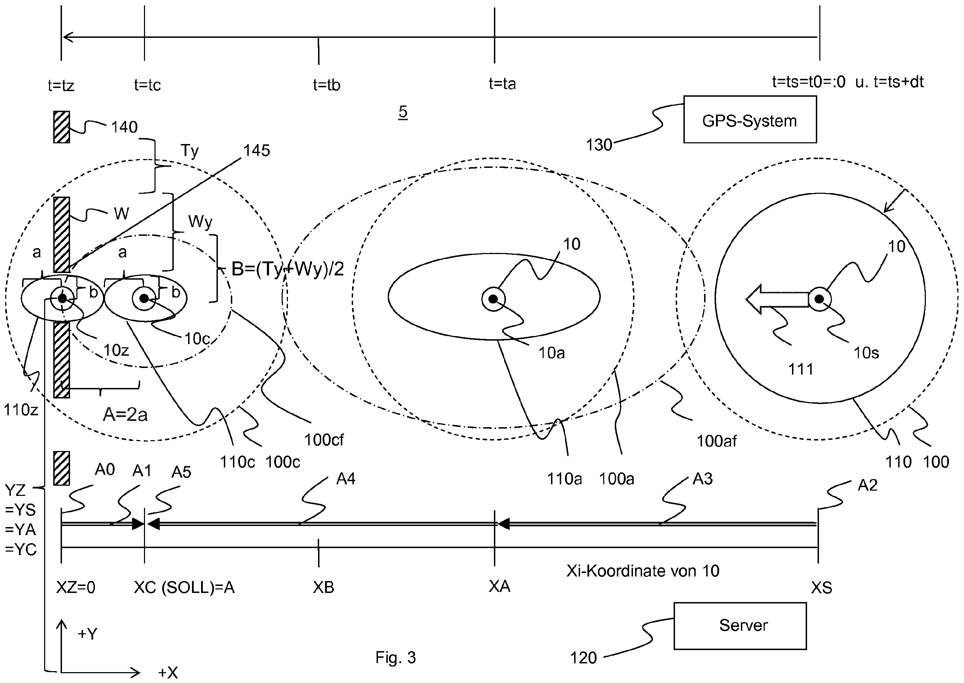

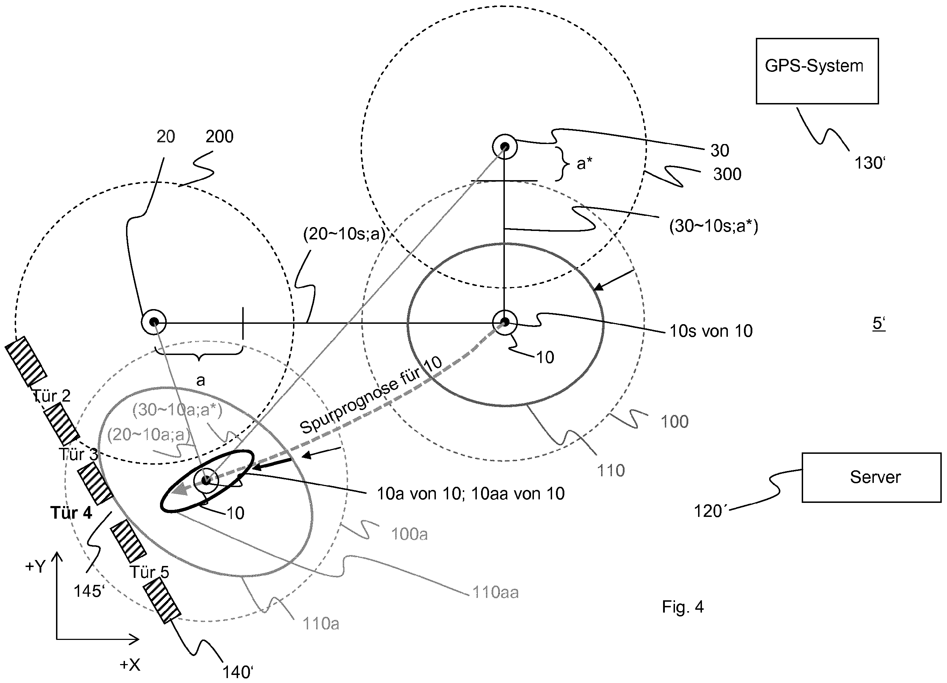

Fig. 1 zeigt als eine beispielhafte bewegliche, drahtlose Kommunikationseinrichtung 10 ein Mobilfunktelefon, insbesondere ein Smartphone, welches über die bekannten Funktionalitäten verfügen kann. Das Smartphone 10 kann in einem Positionsbestimmungssystem 5 oder 5' benutzt werden, wie es beispielhaft und ausschnittsweise in den Fig. 3 und 4 dargestellt ist.

Das Smartphone 10 kann eine drahtlose Datenkommunikationsschnittstelle 14 aufweisen, über die es drahtlos mit anderen beweglichen und/oder statischen Kommunikationseinrichtungen Daten austauschen kann. Bei der Schnittstelle 14 kann es sich um eine Wi-Fi Direkt-fähige Schnittstelle handeln. Die Schnittstelle 14 weist vorzugsweise eine Antenne und einen Empfängerchip auf. Wie nachfolgend noch detailliert erläutert wird, kann die Datenkommunikationsschnittstelle 14 dazu ausgebildet sein, unter Anderem die Positionsinformationen und/oder Beobachtungsinformationen von wenigstens einer anderen beweglichen Kommunikationseinrichtung und/oder wenigstens einer statischen Kommunikationseinrichtung zu empfangen und/oder dorthin zu auszusenden. Eine solche Positionsinformation, die die jeweilige Kommunikationseinrichtung beispielsweise mittels eines GPS-Empfängers selbst erzeugen kann, enthält zum Beispiel Angaben über wenigstens eine Positionskoordinate, deren Genauigkeit und gegebenenfalls über einen Gültigkeitszeitpunkt.

Das Smartphone 10 weist ferner eine Speichereinrichtung 11 auf, welche als Datenspeicher bezeichnet wird. In dem Datenspeicher 11 können selbst erzeugte Positionsinformationen, und/oder selbst erzeugte Beobachtungsinformationen, und/oder Positionsinformationen und/oder Beobachtungswerter von anderen Kommunikationseinrichtungen abgelegt werden. Solche Beobachtungsinformationen enthalten Beobachtungswerte und gegebenenfalls deren Genauigkeit, welche die relative Lage und deren Genauigkeit zwischen zwei Kommunikationseinrichtungen definieren.

Positionsinformationen können wenigstens eine Positionskoordinate, deren Genauigkeit und vorzugsweise einen Gültigkeitszeitpunkt enthalten. Anstelle eines Gültigkeitszeitpunkts kann eine Positionsinformation Angaben enthalten, die dazu verwendet werden können, mit Hilfe einer Interpolation oder Extrapolation aus vorangegangenen Positionsinformationen und/oder Beobachtungswerten einen geeigneten Gültigkeitszeitpunkt zu ermitteln.

In dem Datenspeicher 11 können auch die Positionskoordinaten wenigstens eines vorbestimmten geografischen Ziels, welches das Smartphone 10 zu einem zukünftigen Zeitpunkt im Wesentlichen erreichen wird, und eine vorbestimmte Positionsgenauigkeit für wenigstens eine der Positionskoordinaten des vorbestimmten geografischen Ziels gespeichert werden. Die Daten können aber auch in einer separaten Speichereinrichtung abgelegt werden. Ein an sich bekanntes Karten basiertes Navigationsprogramm kann in einem Speicher 9 gespeichert werden. Wenigstens eine geeignete digitale Karte kann in einem Kartenspeicher 13 abgelegt werden.

Um seine Position und gegebenenfalls deren Genauigkeit selbst bestimmen zu können, kann das Smartphone 10 eine drahtlose Empfangseinrichtung 15 aufweisen, welche zum Empfangen von Positionssignalen eines Positionierungssystems ausgebildet ist. Die Empfangseinrichtung 15 kann zum Beispiel eine Antenne und einen GNSS (Global Navigation Satelliten System)-fähigen Empfänger, der im vorliegenden Beispiel ein herkömmlicher GPS-Empfänger ist, umfassen. Diese Empfangseinrichtung wird nachfolgend auch kurz als GPS-Empfänger 15 bezeichnet. Das Positionierungssystem ist in diesem Fall als ein GPSbasiertes Satellitensystem ausgebildet. Aus den Positionssignalen wird eine Positionsinformation gewonnen, die die Positionskoordinaten des Smartphones 10, die Genauigkeit dieser Positionskoordinaten und vorzugsweise noch einen Gültigkeitszeitpunkt enthält. Die Genauigkeit liegt in der Regel als Standardabweichung vor.

Weiterhin weist das Smartphone 10 eine Steuereinrichtung 18 auf, welche als Mikroprozessor oder Mikrocontroller implementiert sein kann. Die Steuereinrichtung 18 kann dazu ausgebildet sein, folgende Funktionen zu steuern:
a) das Karten basierte Navigationsprogramm auszuführen, um einen Benutzer des Smartphones 10 zu einem vorbestimmten geografischen Hauptziel führen zu können,
b) das Aufstellen wenigstens eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der Messplan Angaben über zu erhebende Messungen und eine Information über den Zeitpunkt und/oder die Position der Durchführung des Messplans enthält,
c) unter Ansprechen auf den Messplan das Liefern von Testergebnissen bezüglich der Positionskoordinaten des festgelegten geografischen Ziels und der Positionsgenauigkeit der wenigstens einen Positionskoordinate zu steuern,
d) unter Ansprechen auf die Testergebnisse zu prüfen, ob bei der realen Durchführung des Messplans die vorbestimmte Positionsgenauigkeit im Wesentlichen erreicht werden kann,
e) das reale Durchführen des Messplans in Abhängigkeit von der im Messplan enthaltenen Information zu steuern, um aktuelle Positions- und/oder Beobachtungsinformationen zu gewinnen, und
f) einen Optimierungsalgorithmus in Abhängigkeit von den gewonnenen aktuellen Positions- und/oder Beobachtungsinformationen auszuführen, um die Positionskoordinaten des Smarthones 10 und die Positionsgenauigkeit der wenigstens einen Positionskoordinate für den Zeitpunkt zu berechnen, zu dem das Smartphone 10 das vorbestimmte geografische Ziel im Wesentlichen erreicht hat.

Angemerkt sei, dass der wenigstens eine, für das geografische Hauptziel aufgestellte Messplan auch als erster Messplan bezeichnet werden kann.

Die oben genannten und noch folgenden Steuerbefehle bzw. Anweisungen sowie der Optimierungsalgorithmus können in einem Programmspeicher 12 abgelegt werden. Die Steuerbefehle sind Teil eines Steuerprogramms. Steuerprogramm und Optimierungsalgorithmus können, je nach Implementierung, auch in verschiedenen Speichern abgelegt werden. Angemerkt sei, dass das Steuerprogramm als App im Smartphone 10 abgelegt werden kann.

Die Steuereinrichtung 18 kann ferner dazu ausgebildet sein, wenigstens eine andere Kommunikationseinrichtung zu ermitteln, welche Positions- und/oder Beobachtungsinformationen bereitstellen kann, welche eine verbesserte Berechnung der Positionskoordinaten des Smartphones 10 und der Positionsgenauigkeit der wenigstens einen Positionskoordinate ermöglichen, wenn das Smartphone 10 das geografische Hauptziel im Wesentlichen erreicht hat.

Unter Ansprechen auf das Steuerprogramm und das Navigationsprogramm kann die Steuereinrichtung 18 simulierte Messungen erstellen, um Testpositions- und/oder Testbeobachtungsinformationen zu erhalten, und/oder vorab im Smartphone 10 gespeicherte Testpositions- und/oder Testbeobachtungsinformationen auslesen, und das Ausführen eines Optimierungsalgorithmus auf die Testpositions- und/oder Testbeobachtungsinformationen steuern, um die Testergebnisse zu liefern, und/oder vorab im Smartphone 10 gespeicherte Testergebnisse auszulesen.

In dem Smartphone 10 können vorbestimmte Kriterien, welche zum Beispiel definierte geografische Netzstrukturen und/oder eine vorbestimmte Irrtumswahrscheinlichkeit enthalten, aus der eine Positionsgenauigkeit abgeleitet werden kann, abgespeichert werden. Die Steuereinrichtung 18 kann dazu ausgebildet sein, das Aufstellen eines Messplans in Abhängigkeit wenigstens eines der vorbestimmten Kriterien aufzustellen, wobei der jeweilige Messplan in Abhängigkeit von der definierten geografischen Netzstruktur, die im Wesentlichen der geografischen Anordnung des Smartphones 10 und wenigstens einer weiteren Kommunikationseinrichtung zum Zeitpunkt der Durchführung des Messplans entspricht, und/oder in Abhängigkeit von der vorbestimmten Irrtumswahrscheinlichkeit aufgestellt wird.

Je nach Situation kann die Steuereinrichtung 18 veranlassen, dass mehrere Messpläne zu einem vorbestimmten geografischen Ziel aufgestellt werden. Hierzu kann die Steuereinrichtung 18 dazu ausgebildet sein,
- unter Ansprechen auf jeden für das vorbestimmte geografische Ziel aufgestellten Messplan das Liefern von jeweiligen Testergebnissen bezüglich der Positionskoordinaten des festgelegten geografischen Ziels und der Positionsgenauigkeit der wenigstens einen Positionskoordinate zu steuern,
- das Prüfen anhand der Testergebnisse des jeweiligen Messplans zu steuern, ob bei der Durchführung des jeweiligen ersten Messplans die festgelegte Positionsgenauigkeit im Wesentlichen erreicht werden kann, und
- das Auswählen eines geeigneten Messplans in Abhängigkeit vorbestimmter Kriterien zu steuern.

Stellt das Smartphone 10 bzw. die Steuereinrichtung 18 fest, dass die berechnete Positionsgenauigkeit außerhalb eines vorbestimmten Toleranzbereichs bezüglich der festgelegten Positionsgenauigkeit liegt, kann sie die wiederholte Ausführung der Funktionen b) bis f) in Echtzeit solange veranlassen, bis die berechnete Positionsgenauigkeit der wenigstens einen Positionskoordinate innerhalb des vorbestimmten Toleranzbereichs bezüglich der festgelegten Positionsgenauigkeit liegt.

Werden ferner die Positionskoordinaten wenigstens eines geografischen Zwischenziels des Smartphones 10 und für wenigstens eine der Positionskoordinaten des wenigstens einen geografischen Zwischenziels eine Positionsgenauigkeit festgelegt, kann die Steuereinrichtung 18 dazu ausgebildet sein, zu veranlassen
- dass für das wenigstens eine geografische Zwischenziel ein Zusatzmessplan zum Gewinnen von Positionsinformationen, welche Positionskoordinaten und deren Genauigkeit enthalten, und/oder von Beobachtungsinformationen, welche Beobachtungswerte und deren Genauigkeiten enthalten, aufgestellt wird, wobei der Zusatzmessplan Angaben über zu erhebenden Messungen und eine Information über den Zeitpunkt und/oder die Position der Durchführung des Zusatzmessplans enthält;
- dass unter Ansprechen auf den Zusatzmessplan Testergebnissen bezüglich der Positionskoordinaten des festgelegten geografischen Zwischenziels und der Positionsgenauigkeit der wenigstens einen Positionskoordinate geliefert werden;
- dass unter Ansprechen auf die Testergebnisse geprüft wird, ob bei der Durchführung des Zusatzmessplans die festgelegte Positionsgenauigkeit für das festgelegte geografische Zwischenziel im Wesentlichen erreicht werden kann, und wenn ja, unter Ansprechen auf diese Testergebnisse ferner geprüft wird, ob bei der Durchführung des für das geografische Hauptziel aufgestellten Messplans die festgelegte Positionsgenauigkeit für das festgelegte geografische Hauptziel im Wesentlichen erreicht werden kann; dass, wenn ja,
- der Zusatzmessplan in Abhängigkeit von der im Zusatzmessplan enthaltenen Information durchgeführt wird, indem das Erheben der im Zusatzmessplan enthaltenen Messungen veranlasst wird, um aktuelle Positions- und/oder Beobachtungsinformationen zu gewinnen; und
- dass ein Optimierungsalgorithmus in Abhängigkeit von den gewonnenen aktuellen Positions- und/oder Beobachtungsinformationen ausgeführt wird, um die Positionskoordinaten der ersten, mobilen Kommunikationseinrichtung und die Positionsgenauigkeit der wenigstens einen Positionskoordinate für den Zeitpunkt zu berechnen, zu dem das Smartphone 10 das geografische Zwischenziel im Wesentlichen erreicht.

Angemerkt sei, dass der Zusatzmessplan auch als zweiter Messplan bezeichnet werden kann.

Auch hinsichtlich des Zwischenziel kann unter Steuerung der Steuereinrichtung 18 wenigstens eine weitere Kommunikationseinrichtung ermittelt werden, welche Positions- und/oder Beobachtungsinformationen bereitstellen kann und welche im zweiten Messplan berücksichtigt wird, um eine verbesserte Berechnung der Positionskoordinaten des Smartphones 10 und der Positionsgenauigkeit der wenigstens einen Positionskoordinate zu ermöglichen, wenn das Smartphone 10 das jeweilige Zwischenziel im Wesentlichen erreicht hat.

Unter Ausführung des im Speicher 9 abgelegten Karten basierte Navigationsprogramm und des Steuerprogramms sowie unter Ansprechen auf einen Zielwunsch des Nutzers des Smartphones 10 - z.B. die bekannteste Eisdiele in einer Entfernung bis zu 100 km - kann die Steuereinrichtung 18 veranlassen, dass die Positionskoordinaten des geografischen Hauptziels, und/oder die Positionsgenauigkeit für die wenigstens eine Positionskoordinate des geografischen Hauptziels, und/oder die Positionskoordinaten wenigstens eines geografischen Zwischenziels, und/oder die Positionsgenauigkeit für die wenigstens eine Positionskoordinate des geografischen Zwischenziels automatisch festgelegt werden.

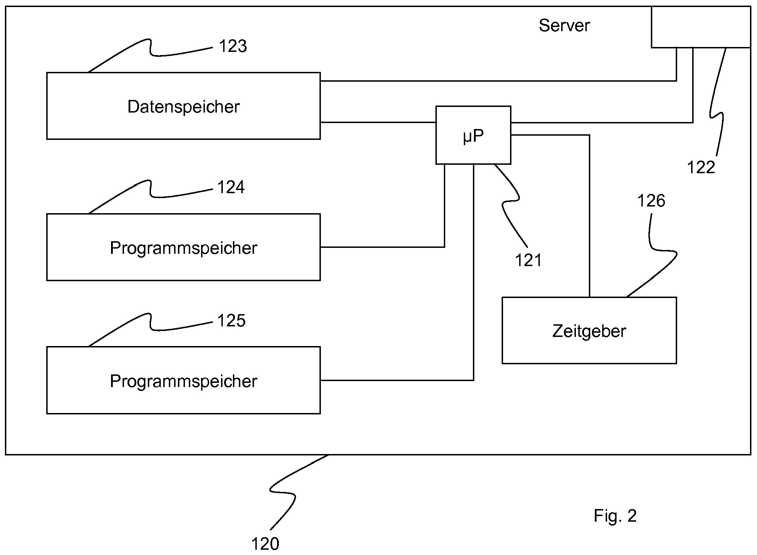

Angemerkt sei, dass zur Unterstützung des Smartphones 10 die Schritte b) bis d) auch von einer zentralen Kommunikationseinrichtung 120 ausgeführt werden können, wobei der erste und/oder zweite Messplan von der zentralen Kommunikationseinrichtung 120 zum Zwecke der Durchführung zum Smartphone 10 übertragen werden können. Eine solche zentrale Kommunikationseinrichtung 120 ist in Fig. 2 beispielhaft dargestellt.

Das Smartphone 10 und/oder die zentrale Kommunikationseinrichtung 120 können dazu ausgebildet sein, die im ersten und/oder zweiten Messplan enthaltenen Informationen über den Zeitpunkt und/oder die Position der Durchführung des jeweiligen Messplans zu erzeugen.

Je nach Anwendung kann der Optimierungsalgorithmus Gleichungssysteme enthalten, welche auf einem statistischen Modell, insbesondere einem Gauß-Markov-Modell oder einem heuristischen Modell basieren. Solche Gleichungssysteme und Modelle sind hinlänglich bekannt. Vorzugsweise beruhen die Optimierungsalgorithmen bzw. die Netzausgleichungen auf der bekannten Methode der kleinsten Fehlerquadrate. Als unbekannte Parameter können bei der Netzausgleichung die Positionskoordinaten und deren Genauigkeit anderer Kommunikationseinrichtungen, gegebenenfalls die Positionskoordinaten und deren Genauigkeit des Smartphones 10, der Gültigkeitszeitpunkt und wenigstens ein gemessener Beobachtungswert verwendet werden.

Der Optimierungsalgorithmus kann insbesondere auf einer geografischen Netzausgleichung, insbesondere einer freien Netzausgleichung, und/oder Bewegungsmodellen und/oder Filtertechniken basieren.

Das Smartphone 10 kann wenigstens eine in der Fig. 1 als Sensor bezeichnete Messeinrichtung 17 zum Messen einer Messgröße enthalten, die einen Beitrag zur Bestimmung einer Beobachtungsinformation liefert. Bei der Messeinrichtung 17 kann es sich um bekannte Sensoren handeln, die vorzugsweise zum Messen eines Abstands, eines Winkels oder einer Richtung zu einer anderen Kommunikationseinrichtung ausgebildet sind. Denkbar ist, dass der Sensor 17 zum Messen eines Winkels zwischen zwei Kommunikationseinrichtungen, die sich in der Nachbarschaft zum Smartphone 10 befinden, ausgebildet ist. Beispielsweise kann der Sensor 17 die Signalstärke des Sendesignals einer anderen Kommunikationseinrichtung messen, um die Strecke zwischen dem Smartphone 10 und der anderen Kommunikationseinrichtung ermitteln zu können.

Das vom Sensor 17 erzeugte Messsignal kann einer separaten Auswerteeinrichtung 16 zugeführt. Alternativ können Sensor 17 und Auswerteeinrichtung 16 auch eine einzige Baukomponente bilden. Die Auswerteeinrichtung 16 ist dazu ausgebildet, in Abhängigkeit vom empfangenen Messsignal die entsprechende Beobachtungsinformation zu bestimmen, welche die relative Lage, gegebenenfalls auch deren Genauigkeit, zwischen dem Smartphone 10 und einer weiteren Kommunikationseinrichtung (nicht dargestellt), oder zwischen zwei weiteren Kommunikationseinrichtungen definiert.

Neben der beispielhaften Wi-Fi Direkt-fähige Datenkommunikationsschnittstelle 14 können weitere Kommunikationsschnittstellen, wie zum Beispiel Schnittstellen gemäß dem BlueTooth-Standard, oder Nahfeld-Kommunikationsschnittstellen, wie zum Beispiel RFID (Radio Frequency Identification)-fähige Schnittstellen, im Smartphone 10 implementiert sein.

Ferner kann das Smartphone 10 einen Zeitgeber 19 aufweisen. Der Zeitgeber 19 kann dazu dienen, zu einem vorbestimmten Gültigkeitszeitpunkt den Mikroprozessor 18 anzustoßen, den Sensor 17 und den GPS-Empfänger 15 zu aktivieren, um einen Beobachtungswert und/oder die Position des Smartphones zu bestimmen. Zudem kann der Mikroprozessor 18 dazu ausgebildet sein, mit Hilfe des Zeitgebers 19 und unter Ansprechen auf einen im Messplan enthaltenen Zeitpunkt die reale Durchführung des Messplans zu steuern.

Fig. 2 zeigt als zentrale, drahtlose Kommunikationseinrichtung 120 einen Server, der eine drahtlose Datenkommunikationsschnittstelle 122 aufweist, welche z. B. gemäß dem Wi-Fi Direct-Standardprotokoll ausgebildet ist. Über die drahtlose Datenkommunikationsschnittstelle 122 kann der Server 120 mit dem Smartphone 10 und beispielsweise mit den in Fig. 3 bzw. 4 gezeigten Kommunikationseinrichtungen 20 und 30 Daten austauschen. Insbesondere kann der Server 120 Positionsinformationen und/oder Beobachtungsinformationen von anderen Kommunikationseinrichtungen und/oder dem Smartphone 10 empfangen, welche in einem Datenspeicher 123 abgelegt werden können. Zudem kann der Server 120 vom Smartphone 10 über die Kommunikationsschnittstelle 122 das vorbestimmte geografische Hauptziel und/oder wenigstens ein Zwischenziel, die vorbestimmte Positionsgenauigkeit der wenigstens einen Positionskoordinate des geografischen Hauptziels und/oder die vorbestimmte Positionsgenauigkeit der wenigstens einen Positionskoordinate des geografischen Zwischenziels empfangen.

In einem Programmspeicher 124 kann ein Optimierungsalgorithmus gespeichert werden, während in einer Speichereinrichtung 125 ein Steuerprogramm abgelegt werden kann.

Im Server 120 ist eine Steuereinrichtung 121, beispielsweise ein Mikroprozessor 121, implementiert, der auf die Programmspeicher 124 und 125 und den Datenspeicher 123 zugreifen kann. Weiterhin kann im Server 120 ein Zeitgeber 126 vorgesehen sein, der unter Anderem dazu ausgebildet ist, den Mikroprozessor 121 zu einem vorbestimmten Gültigkeitszeitpunkt anzustoßen, eine Netzausgleichung zur Bestimmung der Position einer bewegliche Kommunikationseinrichtung auszuführen.

Die Steuereinrichtung 122 ist vorzugsweise dazu ausgebildet,
- wenigstens eine Kommunikationseinrichtung 20 und/oder 30 zu ermitteln, welche einen Beitrag zur verbesserten Positionsbestimmung des Smartphones 10 hinsichtlich des geografischen Ziels leisten kann,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der Messplan Angaben über zu erhebenden Messungen und eine Information über den Zeitpunkt und/oder die Position der Durchführung des Messplans enthält,
- unter Ansprechen auf den Messplan das Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann, wobei die zentrale Kommunikationseinrichtung 120 ferner dazu ausgebildet ist, den aufgestellten Messplan zur Ausführung zum Smartphone 10 zu übertragen.

Fig. 3 zeigt ein Positionsbestimmungssystem 5, welches beispielsweise ein GPS-Positionierungssystem 130, den Server 120 aus Fig. 2 und als drahtlose Kommunikationseinrichtung lediglich das in Fig. 1 dargestellte Smartphone 10 aufweist.

An Hand der Fig. 3 werden beispielhafte, logische Schritte erläutert, die vom Smartphone 10 berücksichtigt werden können, um die Aufstellung einer Abfolge von Messplänen und eine theoretische Bewertung der aufgestellten Messpläne mithilfe simulierter Messungen zu steuern. Das Smartphone 10 bewege sich im Idealfall von einer aktuellen Position 10s geradlinig zu einem Ziel 10z.

Die Erstellung bzw. Aufstellung einer beispielhaften Sequenz von Messplänen an den Stellen 10s, 10a und 10c sowie die Auswirkung der Messpläne bei deren idealer Durchführung am Zielort 10z sind in Fig. 3 gezeigt, in der die fiktiven Zeitpunkte t0=ts=:0, ta, tb, tc und tz ausgewiesen sind. Die x-Koordinaten XS, XA, XB, XC und XZ der Positionen des Smartphones 10 zu den fiktiven Zeitpunkten t0, ta, tb, tc und tz sind ebenfalls in Fig. 3 eingetragen.

Angemerkt sei bereits an dieser Stelle, dass das Aufstellen einer Sequenz von Messplänen dem Prinzip folgt, dass beginnend mit den für das geografische Hauptziel an der Position 10z festgelegten Positionsgenauigkeiten vorzugsweise im Smartphone 10 und/oder dem Server 120 geprüft wird, zu welchen Zeitpunkten und/oder an welchen Orten Messpläne zum Gewinnen von geeigneten Positionsinformationen und/oder Beobachtungsinformationen aufgestellt werden können, um die festgelegten Positionsgenauigkeiten an der Position 10z des Hauptziels einhalten zu können.

Angenommen sei nunmehr, dass das Smartphone 10 sich außerhalb eines Gebäudes 140 befindet und ausreichend sicher zur mittleren Tür 145 an der Position 10z (XZ=0, YZ und mittig in der Türöffnung) navigiert werden soll. Hierzu soll eine vorgegebene Positionsgenauigkeit, in Fig. 3 durch die 1-Sigma Fehlerellipse 110z am Hauptziel 10z dargestellt, eingehalten werden. Diese 1-Sigma Fehlerellipse folgt aus zwei vorzugebenden Irrtumswahrscheinlichkeiten, welche für eine Richtung in und eine Richtung senkrecht zur Bewegungsrichtung 111 des Smartphones 10 bei einer Bewegung von der Position 10s zum Ziel 10z festgelegt werden. Vereinfachend wird hier beispielhaft angenommen, dass die X-Y-Werte der Ellipse 110z nicht miteinander korreliert sind.

Angenommen sei ferner, dass das Smartphone 10 in der Lage ist, ein Steuerprogramm auszuführen, um eine zeitliche Abfolge von Messplänen aufzustellen, die geeignet sind, die Fehlerellipse 110z und die vorgegebenen Irrtumswahrscheinlichkeiten über die Ellipse 110cf und die resultierende 1-Sigma Fehlerellipse 110c bereits an der Position 10c zu erhalten. Aufgrund der stetig geradlinig angenommenen Bewegung sind die Ellipsen 110z und 110c hier bis auf die Translation (XZ, 0) identisch. Die logische Abfolge zum Aufstellen geeigneter Messpläne zur Vorgabe und Realisierung der Ellipse 110c zum Zeitpunkt tc, gültig an der Position 10c und der Position 10z, sind beispielsweise durch die logischen Schritte A0, A1, A2, A3, A4 und A5 gegeben. Angemerkt sei, dass im dargestellten Szenario die gewünschte Positionsgenauigkeit an der Tür 4 bereits am Ziel 10c eingehalten wird. Deshalb bildet die Position 10c den Ort, an welchem zwischenzeitlich letztmalig ein Messplan ausgeführt wird. Die Positionsinformationen hinsichtlich der Tür 145 können zum Beispiel mit einem geeigneten Bewegungsmodell im Smartphone 10 ermittelt werden.

In Schritt A0 werden im Smartpohne 10 die Positionskoordinaten des geografischen Ziels an der Position 10z, welche das Smartphone 10 zu einem zukünftigen Zeitpunkt erreichen wird, eingegeben und zum Beispiel im Speicher 11 abgelegt.

Zudem wird im Smartphone 10 beispielsweise für die x-Positionskoordinate und die y-Positionskoordinate des Ziels 10z jeweils eine Positionsgenauigkeit festgelegt. Die Positionsgenauigkeit der y-Positionskoordinate kann aus einer vorgegebenen Irrtumswahrscheinlichkeit, die senkrecht zur Bewegungsrichtung 111 beispielsweise 0,3% betragen soll, abgeleitet werden. Diese Irrtumswahrscheinlichkeit, die im Speicher 11 abgelegt sein kann, definiert die Wahrscheinlichkeit, mit welcher eine falsche Tür, also eine Tür oberhalb oder unterhalb der Tür 145 erkannt wird. Sie ergibt sich näherungsweise aus der Gleichung B=(Ty+Wy)/2, wodurch aufgrund einer Abdeckung von ca. 99,7% durch 3 mal sigma das 3-sigma in Y Richtung gegeben ist und daraus der Wert 1-Sigma in Y-Richtung zu b=B/3 berechnet wird. Die hier vorliegende genäherte beispielhafte Abschätzung des 1-Sigma Wertes in Y-Richtung ist nur eine von vielen möglichen Näherungen.

Die Positionsgenauigkeit für die x-Positionskoordinate kann aus einer vorgegebenen Irrtumswahrscheinlichkeit, die in Bewegungsrichtung den Wert 2,3% für die Wahrscheinlichkeit des Überfahrens der Tür in X-Richtung haben soll, abgeleitet werden. Auch diese Irrtumswahrscheinlichkeit kann im Speicher 11 abgelegt werden. Überfahren der Tür bedeutet, dass sich das Smartphone 10 bereits hinter der Tür 145 befindet, dass Ziel also bereits überfahren und dabei nicht erkannt hat. Daraus folgt aufgrund einer Abdeckung von ca. 95,4% bei 2 sigma in X-Richtung, dass die Wahrscheinlichkeit des Überfahrens dann ca. 2,3% beträgt. Hieraus folgt A=2*a. Da die vorgegebene Irrtumswahrscheinlichkeit beim Erreichen des Ziels 10z vorzugsweise unterschritten werden soll, sollte die hinsichtlich der x-Positionskoordinate vorgegebene Irrtumswahrscheinlichkeit von 2,3% somit schon zum Zeitpunkt tc, also beim Erreichen des Abstandes XC=2*a bei einem sigma mit Wert a in Bewegungsrichtung 111, also hier in X-Richtung, geprüft und eingehalten werden. Die dazugehörige Position zum Zeitpunkt tc ist 10c (XC, YC=YZ).

Angenommen sei nunmehr, dass die bewegliche Kommunikationseinrichtung 10 zum Zeitpunkt t=ts=t0=0 die Position 10s (XS, YS=YZ) und die gestrichelte Fehlerellipse 100 als Ausgangssituation hat. Diese Daten erhält das Smartphone 10, wenn es nur Positionsinformationen des GPS-Empfängers 15 zur Positionsbestimmung berücksichtigt. Diese Positionsinformationen enthalten die Positionskoordinaten der Position 10s und deren Genauigkeit. Das Smartphone 10 ist dazu ausgebildet zu erkennen, dass die durch die Fehlerellipse 100 wiedergegebene Positioniergenauigkeit nicht ausreicht, die geforderten Irrtumswahrscheinlichkeiten am Ziel 10z einzuhalten. Denn auf dem Weg von Position 10s zum Ziel 10z würde das Smartphone 10, wenn es nur die vom GPS-Empfänger 15 gelieferten Positionsinformationen berücksichtigt, an den Positionen 10a und 10c annähernd nur Positionsgenauigkeiten erzielen, welche durch die 1-Sigma Fehlerellipsen 100a und 100c dargestellt sind.

Das Smartphone 10 ist nunmehr in der Lage, ein Steuerprogramm auszuführen, um eine zeitliche Abfolge von Messplänen aufzustellen, die geeignet sind, beispielsweise die Fehlerellipse 110z und die vorgegebenen Irrtumswahrscheinlichkeiten an der Position 10c über die Ellipse 110cf und die resultierende 1-Sigma Fehlerellipse 110c an der Position 10c zu erhalten.

Um die in Schritt A0 festgelegt Positionsgenauigkeit, welche durch die Fehlerellipse 110z dargestellt wird, einhalten zu können, kann in Schritt A1 die 1-sigma Ellipse 110c an der Position 10c (XC=A, YC=YZ) als Zielvorgabe und die Position 10c als Ort der Durchführung des letzten Messplans definiert werden. Der zuletzt durchzuführende Messplan kann als ein erster Messplan im Sinne der Ansprüche betrachtet werden. Das Ziel ist nun, die Fehlerellipse 110c, welche bis auf die Verschiebung (XC, 0) identisch zur Fehlerellipse 110z ist und somit den in Schritt A0 vorgegebenen Positionsgenauigkeiten entspricht, mit Hilfe geeigneter, noch aufzustellender Messpläne, die zwischen den Zeitpunkten t0 und tc durchgeführt werden sollen, zu erreichen, zu übertreffen bzw. einzuhalten.

Die Ziele der einzelnen Messpläne können aus dem geforderten Genauigkeitsanspruch 110c bzw. 110z und den möglichen Messungen sowie z. B. geeigneten Bewegungsmodellen, Filtertechniken und Ausgleichungstechniken, welche im Smartphone 10 und/oder dem Server 120 gespeichert sein können, abgeleitet werden.

Das Smartphone 10 ist in der Lage, die aktuelle Situation zum aktuellen Zeitpunkt t0 zu bewerten und eine Abfolge von Messplänen aufzustellen, mit denen die Fehlerellipse 100 mit Fortschreiten der Zeit und Position hin zur angestrebten Fehlerellipse 110c oder 110z verbessert werden kann.

Demzufolge kann in Schritt A2 ein Zusatzmessplan, in den Ansprüchen auch zweiter Messplan genannt, für ein erstes Zwischenziel in Echtzeit zum Zeitpunkt t0 oder, exakter gesagt, zum Zeitpunkt t0+dt aufgestellt, mit dem die Fehlerellipse von 100 auf 110 verkleinert werden kann. Allerdings ändern sich die Absolutwerte der Position 10s - vereinfachend gesehen - hier nicht, da nur eine stochastische Betrachtung vorliegt.

Erwähnt sei, dass der Zeitunterschied dt ausreichend klein angenommen wird, um von einer Echtzeitverarbeitung für das Aufstellen, Bewerten, Durchführung des Zusatzmessplans und der Berücksichtigung eines Bewegungsmodells und/oder einer Netzausgleichung ausgehen zu können.

Angenommen sei, dass im Nachfolgeschritt A3 ein weiterer Zusatzmessplan für ein weiteres Zwischenziel 10a aufgestellt wird, der bei Ausführung an der Position 10a die 1-Sigma Fehlerellipse 110a liefere. Bezüglich der durch den Zusatzmessplan erreichten Fehlerellipse von 110a wäre vorzugsweise vom Smartphone 10 zu prüfen, ob es nicht bereits die Position 10c erreicht und/oder ob es die Ziele 10c oder 10z bereits mit zu hoher Wahrscheinlichkeit verpasst haben könnte. Zu diesem Zweck wird auf Position 10a die Ellipse 100af berechnet aus den aus 100cf und 110c eindeutig ableitbaren Skalierungsfaktoren und damit die Wahrscheinlichkeit des Verpassens der Punkte 10c und 10z geprüft.

Angenommen sei nun, dass in Schritt A3 mit dem in Schritt A2 aufgestellten Zusatzmessplan die Irrtumswahrscheinlichkeiten an der Position 10a eingehalten werden können, was durch die 1-Sigma Fehlerellipse 110a angezeigt wird.

Anschließend kann in Schritt A4 ein weiterer Zusatzmessplan erstellt werden, der ebenfalls zur Einhaltung der beiden Irrtumswahrscheinlichkeiten an der Position 10c führt.

Bei der Auswertung realer Messdaten muss die mit realen Messdaten berechnete Ellipse 110c in die mit realen Messdaten berechnete 100cf überführt werden und das Ergebnis dann mit der theoretischen Vorgabe 100cf verglichen werden. Wird wenigstens eine der beiden Irrtumswahrscheinlichkeiten auf Position 10c überschritten, könnte in einem Schritt A5 in Echtzeit zu und für den Zeitpunkt tc ein Zusatzmessplan erstellt und realisiert werden, wodurch die Irrtumswahrscheinlichkeiten weiter verbessert werden könnten.

Ist letzteres nicht möglich, könnten im Zeitraum von tc bis tz weitere Messpläne erstellt werden, um zu versuchen, die vorgegebenen Irrtumswahrscheinlichkeiten zu reduzieren.

Die in Fig. 3 zu den Zeitpunkten t0, ta, und tb dargestellten Fehlerellipsen können als das Ergebnis einer realen Durchführung der jeweiligen, zuvor mittels einer Simulation bewerteten Messpläne und einer Ausführung eines Optimierungsalgorithmus auf die real gewonnenen Positions- und/oder Beobachtungsinformation angesehen werden, während die Fehlerellipse 110z zum Zeitpunkt tz beispielsweise das Ergebnis einer Extrapolationsrechnung sein kann, und den tatsächlichen Aufenthaltsbereich des Smartphones 10 zum Zeitpunkt tz angibt.

In Fig. 3 folge aus den beiden in Schritt A0 vorgegebenen Irrtumswahrscheinlichkeiten bei Türen mit gleichem Abstand und identischen Türbreiten Ty und Wandbreiten Wy und der Vorgabe der Halbachsenlängen A und B der Ellipse 110cf die 1-Sigma Ellipse 110c mit den Halbachsen a und b. In Fig. 3 gilt aufgrund der vorgegebenen Irrtumswahrscheinlichkeiten b=B/3 und a=A/2, wobei A und B aufgrund der Vorgabe von Ty und Wy und der beiden Irrtumswahrscheinlichkeiten eindeutig gegeben sind. Die Gesamtirrtumswahrscheinlichkeit des Zielverfehlens in X oder Y Richtung ist nicht angegeben. Es wird nur beispielhaft erwähnt, dass die Y-Position von der Position 10c mit einer Wahrscheinlichkeit von ca. 0,3% außerhalb von 100cf liegt und die X-Position von der Position 10c mit einer Wahrscheinlichkeit von ca. 4,6% außerhalb von 100cf liegt. Aus der letzten Angabe folgt die Wahrscheinlichkeit des Zielverfehlens durch "Überfahren" in X Richtung zu ca. 2,3% (4,6%/2). Die Wahrscheinlichkeit, die richtige Tür zu erkennen, beträgt im Beispiel ca. 99,7%.

In Fig.3 sind die großen Halbachsen aller Ellipsen in X oder Y Richtung ausgerichtet, sofern nicht ein Kreis vorliegt. Dieses sind nur beispielhafte Situationen. Andere Korrelationen zwischen den X- und Y-Werten und eine andere Orientierung der Hauptachsen der Fehlerellipsen sind möglich und können im Verfahren berücksichtigt werden.

Alle Messpläne können nicht nur durch zu erhebende Messungen, sondern auch durch Bewegungsmodelle und/oder Filterverfahren wie den Kalman Filter, mit denen die Bewegung des Smartphones 10 oder einer anderen Kommunikationseinrichtung zwischen 2 Positionen berechnet werden kann, definiert werden. Messungen und Bewegungsmodelle zur Definition der Messpläne sind in Fig. 3 nicht eingezeichnet worden.

Das Verfahren und die Funktionsweise des Smartphones 10 werden beispielhaft in Verbindung mit einem Positionsbestimmungssystem und insbesondere der Messungen zu benachbarten weiteren Kommunikationseinrichtungen, welches in Fig. 4 dargestellt ist, näher erläutert, wobei in Fig. 4 durch die vorliegende Geometrie der Streckenmessungen zu benachbarten Kommunikationseinrichtungen auch spezielle Orientierungen der Ellipsen und spezielle korrelierte X- und Y-Werte folgen.

Fig. 4 zeigt beispielhaft und schematisch ein Positionsbestimmungssystem 5', welches als Positionierungssystem 130' ein GPS-System aufweist. Ferner umfasst das Positionsbestimmungssystem 5' das in Fig. 1 illustrierte Smartphone 10, zwei weitere Kommunikationseinrichtungen 20 und 30 und den Server 120 nach Fig. 2. Die Kommunikationseinrichtungen 20 und 30 können als Smartphones ausgebildet sein, wobei sie im Betrachtungszeitraum des in Verbindung mit Fig. 4 erläuterten Szenarios als statische Kommunikationseinrichtungen betrachtet werden. Aufbau und Funktionsweise der Smartphones 20 und 30 können dem Aufbau und der Funktionsweise des in Fig. 1 gezeigten Smartphones 10 entsprechen. Wenigstens eine der Kommunikationseinrichtungen 20 und 30 könnte auch als stationäre Kommunikationseinrichtung ausgebildet sein, wobei sie dann im Wesentlichen die in Fig. 1 gezeigten Komponenten aufweist, um die hinsichtlich des Smartphones 10 erläuterten Funktionen ausführen zu können.

Wie das Smartphone 10 sind die Smartphones 20 und 30 jeweils dazu ausgebildet, mit Hilfe eines GPS-Empfängers aus Positionssignalen, welche beispielsweise vom GPS-Positionierungssystem 130' ausgestrahlt werden, ihre Position und die dazugehörende Genauigkeiten zu bestimmen. Zudem sind die Smartphones 20 und 30, wie das Smartphone 10, in der Lage, mit Hilfe eines Sensors Messungen zu den jeweils anderen Kommunikationseinrichtungen auszuführen, um Beobachtungsinformationen zu gewinnen.

Angenommen sei nunmehr, dass der Nutzer des Smartphones 10 durch eine Tür 4 (siehe Element 145') eines Gebäudes 140' gehen möchte. Zu diesem Zweck werden im Smartphone 10 die Positionskoordinaten des Mittelpunktes der Tür 4 als geografisches Hauptziel eingegeben und für wenigstens eine Positionskoordinate des geografischen Hauptziels eine Positionsgenauigkeit festgelegt. Die Positionsgenauigkeit wird, wie zuvor in Verbindung mit Fig. 3 ausführlich erläutert, durch Irrtumswahrscheinlichkeiten festgelegt, welche im Speicher 11 abgelegt werden können. Die vom Nutzer vorgegebenen Irrtumswahrscheinlichkeiten können durch eine Fehlerellipse dargestellt werden, welche der Fehlerellipse 110aa entspricht. Die Positionskoordinaten der Tür 4, die Ausdehnung der Tür sowie geografische Nachbarschaftsinformationen wie Abstände zur nächsten Tür können einer im Kartenspeicher 13 abgelegten digitalen Karte entnommen werden.

Aufgabe ist es nunmehr, vorzugsweise unter Steuerung des Smartphones 10 wenigstens einen geeigneten Messplan, vorzugsweise aber eine geeignete Sequenz von Messplänen vor deren realer Durchführung aufzustellen und zu bewerten, um entscheiden zu können, ob der Nutzer präzise genug, d.h. unter Einhaltung der vorgegebenen Positionsgenauigkeit, mit Hilfe des Smartphones 10 zur Tür 4 navigiert werden kann.

Angenommen sei ferner, dass sich alle drei Smartphones 10, 20 und 30 unter freiem Himmel befinden und GPS-Beobachtungen und/oder GPS-Positionsbestimmungen durchführen können, welche kreisförmige Fehlerellipsen liefern, die über den Betrachtungszeitraum identisch und konstant sind.

Weiterhin sei angenommen, dass das Smartphone 10 mithilfe des im Speicher 9 abgelegten Karten basierten Navigationsprogramms und der im Kartenspeicher 13 hinterlegten digitalen Karte den Nutzer des Smartphones 10 zur Tür 4 navigieren kann.

Es wird weiter vereinfachend angenommen, dass die Positionsgenauigkeiten der Kommunikationseinrichtungen 10 bis 30 nicht von vorherigen Positionen und deren Positionsgenauigkeiten abhängig sind, oder dass diese Abhängigkeit hier vernachlässigt wird. Es wird aber angenommen, dass das Smartphone 10 den ungefähren Weg des Nutzers zur Tür 4 prognostizieren kann, wobei hierbei bereits die dafür notwendige Position des Smartphone 10 auf einer Spurprognose vorausgesetzt wird.

Nunmehr sei angenommen, dass sich das Smartphone 10 entlang einer prognostizierten Spur zur Tür 4 bewegt und sich aktuell kurz vor der Position 10s befindet. Bis zum aktuellen Zeitpunkt wurden die Positionskoordinaten und somit auch die Positionskoordinaten der aktuellen Position und deren Genauigkeit nur mittels des GPS-Empfängers 15 bestimmt worden. Die resultierende Positionsgenauigkeit wird durch die Fehlerellipse 100 verdeutlicht.

Das Smartphone 10 ist dazu ausgebildet, zu prüfen, ob die mittels des GPS-Empfängers 15 gelieferte Positionsgenauigkeit ausreicht, die Tür 4 mit der gewünschten Positionsgenauigkeit zu erreichen. Das Smartphone 10 erkennt, dass die Genauigkeit des GPS-Empfängers 10, dargestellt durch die Fehlerellipse 100 nicht ausreicht, das Ziel mit der gewünschten Genauigkeit zu erreichen, wenn der Nutzer der prognostizierten Spur folgt und die Positionsgenauigkeit nicht verbessert wird. Es weiß nunmehr, dass neben der GPS-Positionsbestimmung weitere Messungen notwendig sind, um bei der Navigation des Nutzers zur Tür 4 die gewünschte Positionsgenauigkeit einhalten zu können. Folglich wird ein Zwischenziel an der Position 10s mit einer gewünschten Positionsgenauigkeit vorgegeben, welche durch die Fehlerellipse 110 dargestellt wird.

Angenommen sei, dass die Smartphones 10 bis 30 dazu ausgebildet sind, untereinander Positionsinformationen und, sofern vorhanden, Beobachtungsinformationen auszutauschen, welche zum Beispiel über die drahtlose Schnittstelle 14 des Smartphones gesendet oder empfangen und im Datenspeicher 11 abgelegt werden können. Die Positions- und/oder Beobachtungsinformationen können auch zum Server 120' vom Typ 120 in Fig. 2 übertragen werden.

Unter Ansprechen auf die von den Smartphones 20 und 30 empfangenen Positionsinformationen erkennt das Smartphone 10, dass sich die Smartphones 20 und 30 an der Position 10s des Zwischenziels in einer ausreichenden Nähe befinden und Positionsinformationen und/oder Beobachtungsinformationen liefern können, welche in einem Messplan oder einer Folge von Messplänen berücksichtigt werden könnten, um bei der Navigation des Nutzers zur Tür 4 die gewünschte Positionsgenauigkeit einzuhalten.

Aus den bereits über einen gewissen Zeitraum hin empfangenen Positionsinformationen der Smartphones 20 und 30 und der im Speicher 13 gespeicherten digitalen Karte erkennt das Smartphone 10 zudem, dass am Ort 10s Streckenmessungen ohne bekannte Hindernisse zwischen den drei Smartphones 10 bis 30 möglich sind und dass die Genauigkeiten der jeweiligen Streckenmessungen im vorliegenden Fall aus den bekannten Eigenschaften der beteiligten Smartphones ableitbar sind. Weiterhin ist dem Smartphone 10 zum aktuellen Zeitpunkt auch bekannt, dass sich die Smartphones 20 und 30 seit einiger Zeit nicht bewegt haben und vermutlich abgelegt worden sind. Folglich können die beiden Smartphones 20 und 30 in erster Näherung für zukünftige Berechnungen als statische Kommunikationseinrichtungen mit identischer Position angenommen werden.

Unter Steuerung des im Programmspeicher 12 abgelegten Steuerprogramms steuert der Mikroprozessor 18 das Aufstellen eines Zusatzmessplans für das Zwischenziel 10s. Der Messplan enthält Angaben darüber, dass das Smartphone 10 eine Streckenmessung (30∼10s;a*) von der Position 10s des Smartphones 10 zur Position des Smartphones 30 mit der Standardabweichung a* und eine Streckenmessung (20∼10s;a) von der Position 10s zur Position des Smartphones 20 mit der Standardabweichung a erheben soll. Zudem enthält der Zusatzmessplan einen Zeitpunkt ts und/oder die Position 10s, welche den Zeitpunkt bzw. den Ort zur Durchführung des Zusatzmessplans definieren. Für einen fiktiven Zeitpunkt ts veranlasst das Smartphone 10, dass Streckenmessungen zu den beiden Kommunikationseinrichtungen 20 und 30 simuliert werden. Unter Anwendung eines Optimierungsalgorithmus, zum Beispiel einer Netzausgleichung, welche als Eingangsgrößen die Position 10s des Smartphones 10, die Positionen der Smartphones 20 und 30 sowie deren Ausgangsgenauigkeiten 100, 200 und 300 und die Beobachtungsinformationen der beiden Streckenmessungen berücksichtigt, werden Testergebnisse bezüglich der Positionskoordinaten des Zwischenziels 10s und der Positionsgenauigkeit berechnet. Unter Ansprechen auf die so gewonnenen Testergebnisse wird geprüft, ob bei Ausführung des Zusatzmessplans die für das Zwischenziel vorgegebene Positionsgenauigkeit eingehalten werden kann. Angenommen sei, dass mit dem Zusatzmessplan die Fehlerellipse 110 eingehalten werden kann.

Somit erkennt das Smartphone 10, dass, wenn nur dieser eine Zusatzmessplan ausgeführt wird, die vorgegebene Positionsgenauigkeit des Hauptziels, also der Tür 4, nicht eingehalten werden kann, was das Smartphone an Hand einer vorgegebenen Irrtumswahrscheinlichkeit aus Speicher 11 entscheidet.

Angenommen sei, dass das Smartphone 10, wie bereits erwähnt eine Spurprognose zur Tür 4 berechnen kann, und anhand vorbestimmter Kriterien erkennt kann, dass für die zukünftige Position 10a ein geeigneter Messplan aufgestellt werden kann. Zudem erkennt das Smartphone 10, dass an der Position 10a wiederum Streckenmessungen zu den Smartphones 20 und 30 möglich sind.

Unter Steuerung des im Programmspeicher 12 abgelegten Steuerprogramms steuert der Mikroprozessor 18 nunmehr das Aufstellen eines Messplans. Der Messplan enthält Angaben darüber, dass das Smartphone 10 eine Streckenmessung (30∼10a;a*) von der zukünftigen Position 10a des Smartphones 10 zur Position des Smartphones 30 mit der Standardabweichung a* und eine Streckenmessung (20∼10a;a) von der zukünftigen Position 10a zur Position des Smartphones 20 mit der Standardabweichung a erheben soll. Zudem enthält der Messplan einen Zeitpunkt ta und/oder die Position 10a, welche den Zeitpunkt bzw. den Ort zur Durchführung des Messplans definieren. Für einen fiktiven Zeitpunkt ta veranlasst das Smartphone 10, dass Streckenmessungen zu den beiden Kommunikationseinrichtungen 20 und 30 simuliert werden. Unter Anwendung eines Optimierungsalgorithmus, zum Beispiel einer Netzausgleichung, welche als Eingangsgrößen die Position 10a des Smartphones 10, die Positionen der Smartphones 20 und 30 sowie deren Ausgangsgenauigkeiten 100a, 200 und 300 und die Beobachtungsinformationen der beiden Streckenmessungen berücksichtigt, werden Testergebnisse bezüglich der Positionskoordinaten des Ziels 10a und der Positionsgenauigkeit berechnet. Unter Ansprechen auf die so gewonnenen Testergebnisse wird geprüft, ob bei realer Ausführung des Messplans die für das Ziel vorgegebene Positionsgenauigkeit eingehalten werden kann. Angenommen sei, dass mit dem Messplan die Fehlerellipse 110a realisiert werden kann. Allerdings kann mit dem Zusatzmessplan des Zwischenziels 10s und dem Messplan für die Position 10a die vorgegebene Positionsgenauigkeit für die Tür 4 nicht eingehalten werden. Die vorgegebene Positionsgenauigkeit ist in Fig. 4 nicht eingezeichnet, aber sie sei ca. 5 % größer als die Ellipse 110aa und kann vom Smartphone 10 vorab aus vorgegebenen Irrtumswahrscheinlichkeiten aus Speicher 11 und den Türdimensionen und Türabständen aus Speicher 13 berechnet werden und in Speicher 11 abgelegt sein.

Deshalb führt der Mikroprozessor 18 das Steuerprogramm noch einmal aus, um für die Position 10a einen zweiten Messplan aufzustellen. Der zweite Messplan für die Position 10a enthält Angaben darüber, dass das Smartphone 10 noch einmal eine Streckenmessung (30∼10a;a*) von der zukünftigen Position 10a des Smartphones 10 zur Position des Smartphones 30 mit der Standardabweichung a* und eine Streckenmessung (20∼10a;a) von der zukünftigen Position 10a zur Position des Smartphones 20 mit der Standardabweichung a erheben soll. Zudem soll zusätzlich eine Streckenmessung zwischen den Positionen der Smartphones 20 und 30 von dem Smartphone 20 erhoben werden, wobei die entsprechenden Beobachtungsinformationen dann vom Smartphone 20 zum Smartphone 10 übertragen werden sollen. Zudem enthält der zweite Messplan einen Zeitpunkt ta+dt, welcher den Zeitpunkt zur Durchführung des zweiten Messplans definiert. Für einen fiktiven Zeitpunkt ta+dt veranlasst das Smartphone 10, dass Streckenmessungen zu den beiden Kommunikationseinrichtungen 20 und 30 und zwischen den beiden Smartphones 20 und 30 simuliert werden. Der Zeitfortschritt dt sei derart klein, dass die zwei Messpläne der Zeitpunkte ta und ta+dt im Wesentlichen zur gleichen Zeit gelten. Unter Anwendung eines Optimierungsalgorithmus, zum Beispiel einer Netzausgleichung, welche als Eingangsgrößen die Position 10a der Smartphones 10, die Positionen der Smartphones 20 und 30 sowie deren Ausgangsgenauigkeiten 100a, 200 und 300 und die Beobachtungsinformationen der drei Streckenmessungen berücksichtigt, werden Testergebnisse bezüglich der Positionskoordinaten des Ziels 10a und der Positionsgenauigkeit berechnet. Unter Ansprechen auf die so gewonnenen Testergebnisse wird geprüft, ob bei realer Ausführung des zweiten Messplans die für das Ziel 10a vorgegebene Positionsgenauigkeit eingehalten werden kann. Angenommen sei, dass mit dem zweiten Messplan die Fehlerellipse 110aa realisiert wird und somit die für die Tür 4 als Hauptziel vorgegebene Positionsgenauigkeit eingehalten werden kann.

Sollte jedoch auch die Fehlerellipse 110aa nicht ausreichend sein, können zusätzlich noch andere Maßnahmen vom Smartphone 10 ergriffen und geprüft werden. So könnten in einer Netzausgleichung auch die Positionen der Smartphones 20 und 30 verbessert werden, was sich vorteilhaft auf die Genauigkeit der Position des Smartphones 10 auswirkt. Das Smartphone 10 könnte auch entscheiden, dass Bewegungsmodelle und z.B. Kalman Filter zwischen zwei Zeitpunkten in der Netzausgleichung zu berücksichtigen sind. Das Smartphone 10 könnte auch entscheiden, ob zusätzliche andere Kommunikationseinrichtungen an der Netzausgleichung zu beteiligen sind oder ob andere Messtypen in oder zwischen den Smartphone genutzt werden können oder ob Messungen auch in Gegenrichtung erfolgen sollen oder ob Messungen mehrfach nacheinander in nahezu Echtzeit ausgeführt werden sollen.

Angemerkt sei, dass während der Navigation des Nutzers zur Tür 4 das Smartphone 10 regelmäßig zum Beispiel anhand der aktuellen Positionsinformationen der Smartphones 10 bis 30 prüfen kann, ob die aufgestellten Messpläne noch Gültigkeit haben, oder zum Beispiel aufgrund einer Bewegung des Smartphones 20 vor der realen Durchführung neu aufgestellt und bewertet werden müssen. Im vorliegenden Beispiel sei eine erneute Aufstellung von Messplänen nicht erforderlich.

Folglich wird der Messplan, GPS basierte Positionsbestimmung und zwei zusätzliche Streckenmessungen, für das Zwischenziel 10s real durchgeführt, sobald das Smartphone die Position 10s im Wesentlichen erreicht hat. Die beiden Messpläne für das Hauptziel 10a werden real durchgeführt, wenn die jeweils in den Messplänen definierten Bedingungen erfüllt sind. Die bei der realen Durchführung der Messpläne gewonnenen Positions- und/oder Beobachtungsinformationen werden als Eingangsgrößen in einem Optimierungsalgorithmus, insbesondere einer Netzausgleichung, berücksichtigt, um die Positionskoordinaten des Smartphones 10 und die Positionsgenauigkeit für den Zeitpunkt zu berechnen, zu dem das Smartphone 10 die Tür 4 im Wesentlichen erreicht. Da die Position 10a vor der Tür 4 liegt, wird zweckmäßigerweise noch ein geeignetes Bewegungsmodell vom Smartphone 10 angewandt, um den Nutzer ausreichend genau, d.h. unter Einhaltung der gewünschten Positionsgenauigkeit, zur Tür 4 navigieren zu können.

Der Server 120' kann, wie hinsichtlich der Fig. 2 erläutert, bestimmte Funktionen, wie zum Beispiel das Aufstellen und Bewerten von Messplänen, deren reale Durchführung jedoch vom Smartphone 10 gesteuert werden soll, ausführen und die aufgestellten und geprüften Messpläne zum Zwecke der Durchführung anschließend zum Smartphone 10 übertragen.

## Patentansprüche

1. Verfahren zur Positionsbestimmung einer mobilen Kommunikationseinrichtung unter Verwendung eines Messplans, mit folgenden Verfahrensschritten:
a1) Festlegen in einer ersten, mobilen und drahtlosen Kommunikationseinrichtung (10), in welcher ein ausführbares, Karten basiertes Navigationsprogramm gespeichert ist, der Positionskoordinaten eines geografischen Ziels, welches die erste, mobile Kommunikationseinrichtung (10) zu einem zukünftigen Zeitpunkt im Wesentlichen erreichen wird, und Festlegen für wenigstens eine der Positionskoordinaten des geografischen Ziels einer Positionsgenauigkeit;
a2) Ausführen des kartenbasierten Navigationsprogramms, um einen Benutzer der ersten, mobilen Kommunikationseinrichtung (10) zum vorbestimmten geografischen Ziel führen zu können;
b) Aufstellen eines ersten Messplans zum Gewinnen von Positionsinformationen, welche Positionskoordinaten und deren Genauigkeiten enthalten, und/oder von Beobachtungsinformationen, welche Beobachtungswerte und deren Genauigkeiten enthalten, wobei der erste Messplan Angaben über zu erhebenden Messungen und eine Information über den Zeitpunkt und/oder die Position der Durchführung des ersten Messplans enthält;
c) Erstellen unter Ansprechen auf den ersten Messplan simulierter Messungen, um Testpositions- und/oder Testbeobachtungsinformationen zu erhalten und Ausführen eines Ausgleichungsverfahrens auf die Testpositions- und/oder Testbeobachtungsinformationen zum Liefern von Testergebnissen bezüglich der Positionskoordinaten des festgelegten geografischen Ziels und der Positionsgenauigkeit der wenigstens einen Positionskoordinate;
d) Prüfen unter Ansprechen auf die Testergebnisse, ob bei der Durchführung des ersten Messplans die in Schritt a) festgelegte Positionsgenauigkeit im Wesentlichen erreicht werden kann; wenn ja
e) Durchführen des ersten Messplans in Abhängigkeit von der im ersten Messplan enthaltenen Information, indem das Erheben der im ersten Messplan enthaltenen Messungen veranlasst wird, um aktuelle Positions- und/oder Beobachtungsinformationen zu gewinnen; und
f) Ausführen einer Netzausgleichung in Abhängigkeit von den in Schritt e) gewonnenen aktuellen Positions- und/oder Beobachtungsinformationen, um die Positionskoordinaten der ersten, mobilen Kommunikationseinrichtung und die Positionsgenauigkeit der wenigstens einen Positionskoordinate für den Zeitpunkt zu berechnen, zu dem die erste, mobile Kommunikationseinrichtung das geografische Ziel im Wesentlichen erreicht.

2. Verfahren nach Anspruch 1,
**dadurch gekennzeichnet, dass**
vor Ausführung des Schrittes b) wenigstens eine zweite Koromunikationseinrichtung ermittelt wird, welche Positions- und/oder Beobachtungsinformationen bereitstellen kann und welche im ersten Messplan berücksichtigt werden kann, um in Schritt f) eine verbesserte Berechnung der Positionskoordinaten der ersten, beweglichen Kommunikationseinrichtung und der Positionsgenauigkeit der wenigstens einen Positionskoordinate zu ermöglichen.

3. Verfahren nach Anspruch 1 oder 2,
**dadurch gekennzeichnet, dass**
in Schritt b) mehrere erste Messpläne aufgestellt werden, dass
Schritt c) folgende Schritte enthält:Erstellen unter Ansprechen auf jeden ersten Messplan simulierter Messungen, um Testpositions- und/oder Testbeobachtungsinformationen zu erhalten, und/oder Auslesen vorab gespeicherter Testpositions- und/oder Testbeobachtungsinformationen, und
Ausführen eines Ausgleichungsverfahrens auf die Testpositions- und/oder Testbeobachtungsinformationen zum Liefern von Testergebnissen bezüglich der Positionskoordinaten des festgelegten geografischen Ziels und der Positionsgenauigkeit der wenigstens einen Positionskoordinate;
;
d) Prüfen anhand der Testergebnisse des jeweiligen ersten Messplan, ob bei der Durchführung des jeweiligen ersten Messplans die in Schritt a) festgelegte Positionsgenauigkeit im Wesentlichen erreicht werden kann; und
Auswählen eines ersten Messplans in Abhängigkeit vorbestimmter Kriterien.

4. Verfahren nach einem der vorstehenden Ansprüche, **dadurch gekennzeichnet, dass**
- in Schritt a1) ferner die Positionskoordinaten wenigstens eines geografischen Zwischenziels der ersten, mobilen Kommunikationseinrichtung und für wenigstens eine der Positionskoordinaten des wenigstens einen geografischen Zwischenziels eine Positionsgenauigkeit festgelegt werden;
- in Schritt b) für das wenigstens eine geografische Zwischenziel ein zweiter Messplan zum Gewinnen von Positionsinformationen, welche Positionskoordinaten und deren Genauigkeit enthalten, und/oder von Beobachtungsinformationen, welche Beobachtungswerte und deren Genauigkeiten enthalten, aufgestellt wird, wobei der zweite Messplan Angaben über zu erhebenden Messungen und eine Information über den Zeitpunkt und/oder die Position der Durchführung des zweiten Messplans enthält;
- in Schritt c) unter Ansprechen auf den zweiten Messplan simulierte Messungen erstellt werden, um Testpositions- und/oder Testbeobachtungsinformationen zu erhalten, und
Ausführen einer Netzausgleichung auf die Testpositions- und/oder Testbeobachtungsinformationen zum Liefern von Testergebnissen bezüglich der Positionskoordinaten des festgelegten geografischen Zwischenziels und der Positionsgenauigkeit der wenigstens einen Positionskoordinate
- in Schritt d) unter Ansprechen auf die Testergebnisse geprüft wird, ob bei der Durchführung des zweiten Messplans die festgelegte Positionsgenauigkeit für das festgelegte geografische Zwischenziel im Wesentlichen erreicht werden kann, und wenn ja, unter Ansprechen auf diese Testergebnisse ferner geprüft wird, ob bei der Durchführung des ersten Messplans die festgelegte Positionsgenauigkeit für das festgelegte geografische Ziel im Wesentlichen erreicht werden kann; wenn ja, wird
- in Schritt e) der zweite Messplan in Abhängigkeit von der im zweiten Messplan enthaltenen Information durchgeführt, indem das Erheben der im zweiten Messplan enthaltenen Messungen veranlasst wird, um aktuelle Positions- und/oder Beobachtungsinformationen zu gewinnen; und
- in Schritt f) wird eine Netzausgleichung in Abhängigkeit von den in Schritt e) gewonnenen aktuellen Positions- und/oder Beobachtungsinformationen ausgeführt, um die Positionskoordinaten der ersten, mobilen Kommunikationseinrichtung und die Positionsgenauigkeit der wenigstens einen Positionskoordinate für den Zeitpunkt zu berechnen, zu dem die erste, mobile Kommunikationseinrichtung das geografische Zwischenziel im Wesentlichen erreicht.

5. Verfahren nach Anspruch 4,
**dadurch gekennzeichnet, dass**
vor Ausführung des Schrittes b) wenigstens eine zweite Kommunikationseinrichtung ermittelt wird, welche Positions- und/oder Beobachtungsinformationen bereitstellen kann und welche im zweiten Messplan berücksichtigt wird, um in Schritt f) eine verbesserte Berechnung der Positionskoordinaten der ersten, beweglichen Kommunikationseinrichtung und der Positionsgenauigkeit der wenigstens einen Positionskoordinate zu ermöglichen.

6. Verfahren nach einem der vorstehenden Ansprüche,
**dadurch gekennzeichnet, dass**
in Schritt a1) die Positionskoordinaten des geografischen Ziels, und/oder die Positionsgenauigkeit für die wenigstens eine Positionskoordinate des geografischen Ziels, und/oder die Positionskoordinaten des geografischen Zwischenziels, und/oder die Positionsgenauigkeit für die wenigstens eine Positionskoordinate des geografischen Zwischenziels manuell an der mobilen Kommunikationseinrichtung eingegeben oder automatisch von der ersten, mobilen Kommunikationseinrichtung festgelegt werden.

7. Verfahren nach einem der vorstehenden Ansprüche,
**dadurch gekennzeichnet, dass**
die Verfahrensschritte a1) bis f) unter Steuerung der ersten, mobilen Kommunikationseinrichtung ausgeführt werden.

8. Verfahren nach einem der vorstehenden Ansprüche,
**dadurch gekennzeichnet, dass**
die Schritte b) bis d) in einer zentralen Kommunikationseinrichtung ausgeführt werden und der erste und/oder zweite Messplan von der zentralen Kommunikationseinrichtung zum Zwecke der Durchführung zur ersten, mobilen Kommunikationseinrichtung übertragen werden.

9. Verfahren nach Anspruch 7 oder 8,
**dadurch gekennzeichnet, dass**, Positionsinformationen und/oder Beobachtungsinformationen, welche aus den von der wenigstens einen zweiten Kommunikationseinrichtung erhobenen Messungen gewonnen werden, zur ersten, mobilen Kommunikationseinrichtung und/oder zur zentralen Kommunikationseinrichtung übertragen werden.

10. Verfahren nach einem der Ansprüche 7 bis 9
**dadurch gekennzeichnet, dass**
die im ersten und/oder zweiten Messplan enthaltenen Informationen über den Zeitpunkt und/oder die Position der Durchführung des jeweiligen Messplans von der ersten, mobilen Kommunikationseinrichtung oder der zentralen Kommunikationseinrichtung erzeugt wird.

11. Positionsbestimmungssystem (5') zur Positionsbestimmung einer mobilen Kommunikationseinrichtung (10) unter Verwendung eines Messplans, aufweisend
ein Positionierungssystem (130'),
eine erste, mobile Kommunikationseinrichtung (10), welche folgende Merkmale aufweist:
eine drahtlose Empfangseinrichtung (15), die dazu ausgebildet ist, Positionssignale von dem Positionierungssystem (130') zu empfangen, um die eigene Position und deren Genauigkeit bestimmen zu können,
eine erste Speichereinrichtung (11), in welcher die Positionskoordinaten eines vorbestimmten geografischen Ziels, welches die erste, mobile
Kommunikationseinrichtung (10) zu einem zukünftigen Zeitpunkt erreichen wird, und wenigstens für eine der Positionskoordinaten des geografischen Ziels eine vorbestimmte Positionsgenauigkeit speicherbar sind,
eine zweite Speichereinrichtung (9), in welcher ein Karten basiertes Navigationsprogramm gespeichert ist,
eine Steuereinrichtung (18), die dazu ausgebildet ist,
- das Karten basierte Navigationsprogramm auszuführen, um einen Benutzer der ersten, mobilen Kommunikationseinrichtung (10) zum vorbestimmten geografischen Ziel führen zu können,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, wobei der Messplan Angaben über zu erhebenden Messungen und eine Information über den Zeitpunkt und/oder die Position der Durchführung des Messplans enthält,
- unter Ansprechen auf den Messplan das Erstellen simulierter Messungen zu steuern, um Testpositions- und/oder Testbeobachtungsinformationen zu erhalten, und
das Ausführen eines Ausgleichungsverfahrens auf die Testpositions- und/oder Testbeobachtungsinformationen zum Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann,
- das Durchführen des Messplans in Abhängigkeit von der im Messplan enthaltenen Information zu steuern, um aktuelle Positions- und/oder Beobachtungsinformationen zu gewinnen, und
- eine Netzausgleichung in Abhängigkeit von den gewonnenen aktuellen Positions- und/oder Beobachtungsinformationen auszuführen, um die Positionskoordinaten der ersten, beweglichen Kommunikationseinrichtung und die Positionsgenauigkeit der wenigstens einen Positionskoordinate für den Zeitpunkt zu berechnen, zu dem die erste, mobile Kommunikationseinrichtung (10) das geografische Ziel im Wesentlichen erreicht.

12. Positionsbestimmungssystem nach Anspruch 11,
**gekennzeichnet durch**
mehrere zweite drahtlose Kommunikationseinrichtungen (20, 30), welche jeweils dazu ausgebildet sind, Positionsinformationen und/oder Beobachtungsinformationen zu ermitteln und diese zur ersten, mobilen Kommunikationseinrichtung (10) zu übertragen, wobei
die erste, mobile Kommunikationseinrichtung (10) eine drahtlose Kommunikationsschnittstelle (14) aufweist, die dazu ausgebildet ist, Positionsinformationen und/oder Beobachtungsinformationen von wenigstens einer der zweiten Kommunikationseinrichtungen (20, 30) zu empfangen und/oder zu wenigstens einer der zweiten Kommunikationseinrichtungen zu übertragen,
wobei die Steuereinrichtung (18) der ersten, mobilen Kommunikationseinrichtung (10) ferner dazu ausgebildet ist, wenigstens eine der zweiten Kommunikationseinrichtungen (20) zu ermitteln, welche Positions- und/oder Beobachtungsinformationen bereitstellen können und welche in dem Messplan berücksichtigt werden kann, um eine verbesserte Berechnung der Positionskoordinaten der ersten, beweglichen Kommunikationseinrichtung und der Positionsgenauigkeit der wenigstens einen Positionskoordinate zu ermöglichen.

13. Positionsbestimmungssystem nach Anspruch 11,
**gekennzeichnet durch**
eine zentrale Kommunikationseinrichtung (120), welche folgende Merkmale aufweist:
eine drahtlose Empfangseinrichtung (122), die dazu ausgebildet ist, Positionsinformationen und/oder Beobachtungsinformationen von wenigstens einer der zweiten Kommunikationseinrichtungen (20, 30) und/oder der ersten, mobilen Kommunikationseinrichtung (10) sowie das vorbestimmte geografische Ziel der ersten mobilen Kommunikationseinrichtung (10) und die vorbestimmte Positionsgenauigkeit der wenigstens einen Positionskoordinate des geografischen Ziels zu empfangen, und eine Steuereinrichtung (121), die dazu ausgebildet ist,
- wenigstens eine der zweiten Kommunikationseinrichtungen (20, 30) zu ermitteln, welche einen Beitrag zur verbesserten Positionsbestimmung der ersten, mobilen Kommunikationseinrichtung (10) hinsichtlich des geografischen Ziels leisten kann,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, zu steuern, wobei der Messplan Angaben über zu erhebende Messungen und eine Information über den Zeitpunkt und/oder die Position der Durchführung des Messplans enthält,
- unter Ansprechen auf den Messplan das Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann, wobei die zentrale Kommunikationseinrichtung (120) ferner dazu ausgebildet ist, den aufgestellten Messplan zur Ausführung zur ersten, mobilen Kommunikationseinrichtung (10) zu übertragen.

14. Mobile Kommunikationseinrichtung (10) aufweisend eine drahtlose Empfangseinrichtung, die dazu ausgebildet ist, Positionssignale von einem Positionierungssystem (130, 130') zu empfangen, um die eigene Position und gegebenenfalls deren Genauigkeit bestimmen zu können,
eine erste Speichereinrichtung (11), in welcher die Positionskoordinaten wenigstens eines vorbestimmten geografischen Ziels, welches die mobile Kommunikationseinrichtung zu einem zukünftigen Zeitpunkt im Wesentlichen erreichen wird, und in welcher wenigstens für eine der Positionskoordinaten des vorbestimmten geografischen Ziels eine vorbestimmte Positionsgenauigkeit speicherbar sind, eine zweite Speichereinrichtung (9), in welcher ein Karten basiertes Navigationsprogramm speicherbar ist, eine Steuereinrichtung (18), die dazu ausgebildet ist,
- das Karten basierte Navigationsprogramm auszuführen, um einen Benutzer der mobilen Kommunikationseinrichtung (10) zum vorbestimmten geografischen Ziel führen zu können,
- das Aufstellen eines Messplans zum Gewinnen von Positionsinformationen, welche Positionskoordinaten und deren Genauigkeit enthalten, und/oder von Beobachtungsinformationen, welche Beobachtungswerte und deren Genauigkeiten enthalten, wobei der Messplan Angaben über zu erhebenden Messungen und eine Information über den Zeitpunkt und/oder die Position der Durchführung des Messplans enthält,
- unter Ansprechen auf den Messplan das Erstellen simulierter Messungen zu steuern, um Testpositions- und/oder Testbeobachtungsinformationen zu erhalten, und
das Ausführen eines Ausgleichungsverfahrens auf die Testpositions- und/oder Testbeobachtungsinformationen zum Liefern von Testergebnissen bezüglich der Positionskoordinaten des festgelegten geografischen Ziels und der Positionsgenauigkeit der wenigstens einen Positionskoordinate zu steuern,
- unter Ansprechen auf die Testergebnisse zu prüfen, ob bei der Durchführung des Messplans die vorbestimmte Positionsgenauigkeit im Wesentlichen erreicht werden kann,
- das Durchführen des Messplans in Abhängigkeit von der im Messplan enthaltenen Information zu steuern, um aktuelle Positions- und/oder Beobachtungsinformationen zu gewinnen, und
- eine Netzausgleichung in Abhängigkeit von den gewonnenen aktuellen Positions- und/oder Beobachtungsinformationen auszuführen, um die Positionskoordinaten der mobilen Kommunikationseinrichtung und die Positionsgenauigkeit der wenigstens einen Positionskoordinate für den Zeitpunkt zu berechnen, zu dem die mobile Kommunikationseinrichtung das vorbestimmte geografische Ziel im Wesentlichen erreicht.

15. Mobile Kommunikationseinrichtung nach Anspruch 14, **gekennzeichnet durch**
eine drahtlose Kommunikationsschnittstelle (14), die dazu ausgebildet ist, Positionsinformationen und/oder Beobachtungsinformationen von wenigstens einer anderen Kommunikationseinrichtung zu empfangen und/oder zu wenigstens einer andern Kommunikationseinrichtung (20, 30) zu übertragen,
wobei die Steuereinrichtung (18) dazu ausgebildet ist, wenigstens eine der anderen Kommunikationseinrichtungen zu ermitteln, welche Positions- und/oder Beobachtungsinformationen bereitstellen kann, die eine verbesserte Berechnung der Positionskoordinaten der ersten, beweglichen Kommunikationseinrichtung und der Positionsgenauigkeit der wenigstens einen Positionskoordinate beim Erreichen des geografischen Ziels ermöglichen.

16. Computerprogramm enthaltend
eine Vielzahl von Anweisungen, die in mehreren drahtlosen Kommunikationseinrichtungen (10, 20, 30), von denen wenigstens eine als mobile Kommunikationseinrichtung (10) ausgebildet ist, speicherbar sind, wobei die Anweisungen, wenn sie von einer Steuereinrichtung (18) der wenigstens einen mobilen Kommunikationseinrichtung (10) ausgeführt werden, das Verfahren nach einem der Ansprüche 1 bis 10 steuern.

## Claims

1. A method for determining the position of a mobile communication device using a measuring plan, comprising the method steps of:
a1) predetermining, in a first mobile and wireless communication device (10) which stores an executable map-based navigation program, the position coordinates of a geographic destination which the first mobile communication device (10) will substantially reach at a future point in time, and predetermining a positional accuracy for at least one of the position coordinates of the geographic destination;
a2) executing the map-based navigation program for being able to guide a user of the first mobile communication device (10) to the predetermined geographic destination;
b) combiling a first measuring plan for obtaining position information which include position coordinates and their accuracies, and/or observation information which include observation values and their accuracies, wherein the first measuring plan includes specifications about the measurements to be collected and information about the time and/or the position of execution of the first measuring plan;
c) generating simulated measurements on the basis of the first measuring plan, in order to obtain test position information and/or test observation information, and performing an adjustment procedure on the test position information and/or test observation information for providing test results regarding the position coordinates of the predetermined geographic destination and the positional accuracy of the at least one position coordinate;
d) verifying, in response to the test results, whether the positional accuracy predetermined in step a) can substantially be achieved when executing the first measuring plan; if so
e) executing the first measuring plan on the basis of the information contained in the first measuring plan, by causing the collection of the measurements contained in the first measuring plan to obtain current position information and/or observation information; and
f) performing network adjusting on the basis of the current position information and/or observation information obtained in step e) to calculate the position coordinates of the first mobile communication device and the positional accuracy of the at least one position coordinate for the time at which the first mobile communication device will substantially reach the geographic destination.

2. The method according to claim 1, **characterized in that** before performing step b), at least one second communication device is identified, which is able to provide position information and/or observation information and which can be taken into account in the first measuring plan in order to allow for an improved calculation of the position coordinates of the first mobile communication device and the positional accuracy of the at least one position coordinate in step f).

3. The method according to claim 1 or 2,
**characterized in that**
a plurality of first measuring plans are compiled in step b); that
step c) comprises the steps of: generating simulated measurements on the basis of each first measuring plan in order to obtain test position information and/or test observation information, and/or
deriving previously stored test position information and/or test observation information, and
performing an adjusting procedure on the test position information and/or or test observation information for providing test results regarding the position coordinates of the predetermined geographic destination and the positional accuracy of the at least one position coordinate;
d) verifying, in response to the test results of the respective first measuring plan, whether the positional accuracy predetermined in step a) can substantially be achieved when executing the respective first measuring plan; and
selecting a first measuring plan on the basis of predetermined criteria.

4. The method according to any one of the preceding claims, **characterized in that**
- in step a1), furthermore, the position coordinates of at least one intermediate geographic destination of the first mobile communication device are predetermined, and a positional accuracy is predetermined for at least one of the position coordinates of the at least one intermediate geographic destination;
- in step b), a second measuring plan is compiled for the at least one intermediate geographic destination, for obtaining position information including position coordinates and their accuracy and/or observation information including observation values and their accuracies, wherein the second measuring plan includes specifications about the measurements to be collected and an item of information about the time and/or the position of execution of the second measuring plan;
- in step c), simulated measurements are generated on the basis of the second measuring plan, in order to obtain test position information and/or test observation information, and
network adjusting is performed on the test position information and/or test observation information for providing test results regarding the position coordinates of the predetermined intermediate geographic destination and the positional accuracy of the at least one position coordinate;
- in step d) it is verified, in response to the test results, whether the predetermined positional accuracy can substantially be achieved for the predetermined intermediate geographic destination when executing the second measuring plan, and if so, it is furthermore verified, in response to these test results, whether the predetermined positional accuracy can substantially be achieved for the predetermined geographic destination when executing the first measuring plan; and if so
- the second measuring plan is executed in step e) on the basis of the information contained in the second measuring plan, by causing the collection of the measurements contained in the second measuring plan to obtain current position information and/or observation information; and
- in step f), network adjusting is performed on the basis of the current position information and/or observation information obtained in step e) in order to calculate the position coordinates of the first mobile communication device and the positional accuracy of the at least one position coordinate for the time at which the first mobile communication device will substantially reach the intermediate geographic destination.

5. The method according to claim 4, **characterized in that** before performing step b), at least one second communication device is identified, which is able to provide position information and/or observation information and which can be taken into account in the second measuring plan, in order to allow for an improved calculation of the position coordinates of the first mobile communication device and the positional accuracy of the at least one position coordinate in step f).

6. The method according to any one of the preceding claims, **characterized in that**
in step a1) the position coordinates of the geographic destination and/or the positional accuracy for the at least one position coordinate of the geographic destination and/or the position coordinates of the intermediate geographic destination and/or the positional accuracy for the at least one position coordinate of the intermediate geographic destination are manually entered at the mobile communication device entered or automatically predetermined by the first mobile communication device.

7. The method according to any one of the preceding claims,
**characterized in that**
the method steps a1) through f) are carried out under control of the first mobile communication device.

8. The method according to any one of the preceding claims,
**characterized in that**
steps b) to d) are executed in a central communication device and that, for the purpose of execution, the first and/or second measuring plans are transmitted from the central communication device to the first mobile communication device.

9. The method according to claim 7 or 8,
**characterized in that**
position information and/or observation information which are obtained from the measurements taken by the at least one second communication device, are transmitted to the first mobile communication device and/or to the central communication device.

10. The method according to any one of claims 7 to 9,
**characterized in that**
the information contained in the first and/or second measuring plans about the time and/or the position of execution of the respective measuring plan is generated by the first mobile communication device or by the central communication device.

11. A position determination system (5') for determining the position of a mobile communication device (10) using a measuring plan, comprising
a positioning system (130');
a first mobile communication device (10) which has the following features:
a wireless receiving device (15) configured to receive position signals from the positioning system (130') in order to be able to determine its own position and the accuracy thereof;
a first memory device (11) which is able to store the position coordinates of a predetermined geographic destination which the first mobile communication device (10) will reach at a future point in time and a predetermined positional accuracy for at least one of the position coordinates of the geographic destination;
a second memory device (9) which stores a map-based navigation program;
a control device (18) configured for
- executing the map-based navigation program in order to be able to guide a user of the first mobile communication device (10) to the predetermined geographic destination;
- compiling a measuring plan for obtaining position information including position coordinates and their accuracy and/or observation information including observation values and their accuracies, wherein the measuring plan includes specifications about measurements to be collected and information about the time and/or position of the execution of the measuring plan;
- controlling the generation of simulated measurements on the basis of the measuring plan, in order to obtain test position information and/or test observation information; and
- controlling the execution of an adjusting procedure on the test position information and/or test observation information for providing test results regarding the position coordinates of the predetermined geographic destination and the positional accuracy of the at least one position coordinate;
- verifying, in response to the test results, whether the predetermined positional accuracy can be substantially achieved when executing the measuring plan,
- controlling the execution of the measuring plan on the basis of the information contained in the measuring plan, in order to obtain current position information and/or observation information; and
- performing network adjusting on the basis of the obtained current position information and/or observation information to calculate the position coordinates of the first mobile communication device and the positional accuracy of the at least one position coordinate for the time at which the first mobile communication device (10) will substantially reach the geographic destination.

12. The position determination system according to claim 11,
**characterized by**
a plurality of second wireless communication devices (20, 30), each of them configured to determine position information and/or observation information and to transmit them to the first mobile communication device (10); wherein
the first mobile communication device (10) has a wireless communication interface (14) which is configured to receive from at least one of the second communication devices (20, 30) and/or to transmit to at least one of the second communication devices position information and/or observation information;
wherein the control device (18) of the first mobile communication device (10) is further configured to identify at least one of the second communication devices (20) which is able to provide position information and/or observation information and which can be taken into account in the measuring plan in order to allow for an improved calculation of the position coordinates of the first mobile communication device and the positional accuracy of the at least one position coordinate.

13. The position determination system according to claim 11,
**characterized by**
a central communication device (120) which has the following features:
a wireless receiving device (122) configured to receive position information and/or observation information from at least one of the second communication devices (20, 30) and/or the first mobile communication device (10) and the predetermined geographic destination of the first mobile communication device (10) and the predetermined positional accuracy of the at least one position coordinate of the geographic destination; and
a control device (121) configured for
- identifying at least one of the second communication devices (20, 30) which is able to contribute to improved position determination of the first mobile communication device (10) with respect to the geographic destination;
- controlling the compilation of a measuring plan for obtaining position information including position coordinates and their accuracy and/or observation information including observation values and their accuracies, wherein the measuring plan includes specifications about the measurements to be collected and an item of information about the time and/or the position of execution of the measuring plan;
- controlling, in response to the measuring plan, the providing of test results regarding the position coordinates of the predetermined geographic destination and the positional accuracy of the at least one position coordinate;
- verifying, in response to the test results, whether the predetermined positional accuracy can be substantially achieved when executing the measuring plan; wherein the central communication device (120) is further configured for transmitting the compiled measuring plan to the first mobile communication device (10), for execution.

14. A mobile communication device (10), comprising a wireless receiving device which is configured to receive position signals from a positioning system (130, 130') in order to be able to determine its own position and optionally the accuracy thereof;
a first memory device (11) which is able to store the position coordinates of at least one predetermined geographic destination that the mobile communication device will substantially reach at a future point in time and which is able to store a predetermined positional accuracy for at least one of the position coordinates of the predetermined geographic destination; a second memory device (9) which is able to store a map-based navigation program;
a control device (18) which is configured for
- executing the map-based navigation program in order to be able to guide a user of the mobile communication device (10) to the predetermined geographic destination;
- compiling a measuring plan to obtain position information including position coordinates and their accuracy and/or observation information including observation values and their accuracies, wherein the measuring plan includes specifications about the measurements to be collected and an item of information about the time and/or the position of execution of the measuring plan;
- controlling, on the basis of the measuring plan, the generation of simulated measurements to obtain test position information and/or test observation information, and
controlling the execution of an adjusting procedure on the test position information and/or test observation information for providing test results regarding the position coordinates of the predetermined geographic destination and the positional accuracy of the at least one position coordinate;
- verifying, in response to the test results, whether the predetermined positional accuracy can be substantially achieved when performing the measuring plan;
- controlling the execution of the measuring plan on the basis of the information contained in the measuring plan in order to obtain current position information and/or observation information; and
- performing network adjusting on the basis of the obtained current position information and/or observation information in order to calculate the position coordinates of the mobile communication device and the positional accuracy of the at least one position coordinate for the time at which the mobile communication device will substantially reach the predetermined geographic destination.

15. The mobile communication device according to claim 14,
**characterized by**
a wireless communication interface (14) configured to receive from at least one further communication device and/or to transmit to at least one further communication device (20, 30) position information and/or observation information;
wherein the control device (18) is configured for identifying at least one of the further communication devices which is able to provide position information and/or observation information which allow for an improved calculation of the position coordinates of the first mobile communication device and the positional accuracy of the at least one position coordinate when reaching the geographic destination.

16. A computer program, comprising
a multitude of instructions that can be stored in a plurality of wireless communication devices (10, 20, 30) of which at least one is in the form of a mobile communication device (10), wherein the instructions when executed by a control device (18) of the at least one mobile communication device (10), control the method according to any one of claims 1 to 10.

## Revendications

1. Procédé de détermination de position d'un dispositif de communication mobile au moyen d'un plan de mesure, comprenant les étapes de procédé suivantes :
a1) la spécification dans un premier dispositif de communication mobile (10) et sans fil, dans lequel est mis en mémoire un programme de navigation exécutable, basé sur des cartes, des coordonnées de position d'une destination géographique que le premier dispositif de communication mobile (10) atteindra sensiblement à un moment ultérieur, et la spécification pour au moins une des coordonnées de position de la destination géographique d'une précision de position ;
a2) l'exécution du programme de navigation basé sur des cartes, afin de pouvoir guider un utilisateur du premier dispositif de communication mobile (10) vers la destination géographique prédéfinie ;
b) l'établissement d'un premier plan de mesure permettant d'obtenir des informations de position, lesquelles contiennent des coordonnées de position et les précisions de celles-ci, et/ou des informations d'observation, lesquelles contiennent des valeurs d'observation et les précisions de celles-ci, où le premier plan de mesure contient des indications concernant les mesures à prendre et une information concernant le moment et/ou la position de la mise en oeuvre du premier plan de mesure ;
c) la réalisation, en réponse au premier plan de mesure, de mesures simulées afin d'obtenir des informations de position d'essai et/ou d'observation d'essai et l'exécution d'un procédé d'ajustement sur les informations de position d'essai et/ou d'observation d'essai pour la fourniture de résultats d'essais concernant les coordonnées de position de la destination géographique spécifiée et la précision de position de l'au moins une coordonnée de position ;
d) la vérification en réponse aux résultats des essais, si, lors de la mise en oeuvre du premier plan de mesure, la précision de position spécifiée à l'étape a) peut être sensiblement atteinte ; si oui
e) la mise en oeuvre du premier plan de mesure en fonction de l'information contenue dans le premier plan de mesure, en déclenchant la prise des mesures contenues dans le premier plan de mesure, afin d'obtenir des informations de position et/ou d'observation actuelles ; et
f) l'exécution d'un ajustement du réseau en fonction des informations de position et/ou d'observation actuelles obtenues à l'étape e), afin de calculer les coordonnées de position du premier dispositif de communication mobile et la précision de position de l'au moins une coordonnée pour le moment auquel le premier dispositif de communication mobile atteint sensiblement la destination géographique.

2. Procédé selon la revendication 1, **caractérisé en ce que**, avant l'exécution de l'étape b), au moins un deuxième dispositif de communication est identifié, lequel peut fournir des informations de position et/ou d'observation et lequel peut être pris en compte dans le premier plan de mesure, afin de permettre, à l'étape f), un calcul amélioré des coordonnées de position du premier dispositif de communication mobile et de la précision de position de l'au moins une coordonnée de position.

3. Procédé selon la revendication 1 ou 2, **caractérisé en ce que**
à l'étape b), plusieurs premiers plans de mesure sont établis, **en ce que**
l'étape c) contient les étapes suivantes : la réalisation, en réponse à chaque premier plan de mesure, de mesures simulées, afin d'obtenir des informations de position d'essai et/ou d'observation d'essai, et/ou la lecture d'informations de position d'essai et/ou d'observation d'essai préalablement mises en mémoire, et
l'exécution d'un procédé d'ajustement sur les informations de position d'essai et/ou d'observation d'essai pour la fourniture de résultats des essais concernant les coordonnées de position de la destination géographique spécifiée et la précision de position de l'au moins une coordonnée de position ;
d) la vérification, sur la base des résultats des essais du premier plan de mesure respectif, si, lors de la mise en oeuvre du premier plan de mesure respectif, la précision de position spécifiée à l'étape a) peut être sensiblement atteinte ; et
la sélection d'un premier plan de mesure en fonction de critères prédéfinis.

4. Procédé selon l'une quelconque des revendications précédentes, **caractérisé en ce que**
- à l'étape a1), les coordonnées de position au moins d'une destination géographique intermédiaire du premier dispositif de communication mobile et, pour au moins une des coordonnées de position de l'au moins une destination géographique intermédiaire, une précision de position sont en outre spécifiées ;
- à l'étape b), pour l'au moins une destination géographique intermédiaire, un deuxième plan de mesure permettant l'obtention d'informations de position, lesquelles contiennent des coordonnées de position et la précision de celles-ci, et/ou d'informations d'observation, lesquelles contiennent des valeurs d'observation et les précisions de celles-ci, est établi, où le deuxième plan de mesure contient des indications concernant les mesures à prendre et une information concernant le moment et/ou la position de la mise en oeuvre du deuxième plan de mesure ;
- à l'étape c), en réponse au deuxième plan de mesure, des mesures simulées sont réalisées, afin d'obtenir des informations de position d'essai et/ou d'observation d'essai, et
l'exécution d'un procédé d'ajustement sur les informations de position d'essai et/ou d'observation d'essai pour la fourniture de résultats des essais concernant les coordonnées de position de la destination géographique intermédiaire spécifiée et la précision de position de l'au moins une coordonnée de position ;
- à l'étape d), en réponse aux résultats des essais, la vérification si, lors de la mise en oeuvre du deuxième plan de mesure, la précision de position spécifiée pour la destination géographique intermédiaire spécifiée peut être sensiblement atteinte, et si oui, en réponse à ces résultats des essais, la vérification si, lors de la mise en oeuvre du premier plan de mesure, la précision de position spécifiée pour la destination géographique spécifiée peut être sensiblement atteinte ; si oui,
- à l'étape e) le deuxième plan de mesure est mis en oeuvre en fonction de l'information contenue dans le deuxième plan de mesure, en déclenchant la prise des mesures contenues dans le deuxième plan de mesure, afin d'obtenir des informations de position et/ou d'observation actuelles ; et
- à l'étape f), un ajustement du réseau est exécuté en fonction des informations de position et/ou d'observation actuelles obtenues à l'étape e), afin de calculer les coordonnées de position du premier dispositif de communication mobile et la précision de position de l'au moins une coordonnée de position pour le moment auquel le premier dispositif de communication mobile atteint sensiblement la destination géographique intermédiaire.

5. Procédé selon la revendication 4, **caractérisé en ce que**, avant l'exécution de l'étape b), au moins un deuxième dispositif de communication est identifié, lequel peut fournir des informations de position et/ou d'observation et lequel peut être pris en compte dans le deuxième plan de mesure, afin de permettre, à l'étape f), un calcul amélioré des coordonnées de position du premier dispositif de communication mobile et de la précision de position de l'au moins une coordonnée de position.

6. Procédé selon l'une quelconque des revendications précédentes, **caractérisé en ce que**, à l'étape a1), les coordonnées de position de la destination géographique, et/ou la précision de position pour l'au moins une coordonnée de position de la destination géographique, et/ou les coordonnées de position de la destination géographique intermédiaire, et/ou la précision de position pour l'au moins une coordonnée de position de la destination géographique intermédiaire sont entrées manuellement sur le dispositif de communication mobile ou spécifiées automatiquement par le premier dispositif de communication mobile.

7. Procédé selon l'une quelconque des revendications précédentes, **caractérisé en ce que** les étapes de procédé a1) à f) sont exécutées par commande du premier dispositif de communication mobile.

8. Procédé selon l'une quelconque des revendications précédentes, **caractérisé en ce que** les étapes b) à d) sont exécutées dans un dispositif de communication central et le premier et/ou le deuxième plan de mesure, afin d'être mis en oeuvre, sont transmis par le dispositif de communication central au premier dispositif de communication mobile.

9. Procédé selon la revendication 7 ou 8, **caractérisé en ce que** des informations de position et/ou des informations d'observation, lesquelles sont obtenues des mesures prises par l'au moins un deuxième dispositif de communication, sont transmises au premier dispositif de communication mobile et/ou au dispositif de communication central.

10. Procédé selon l'une quelconque des revendications 7 à 9, **caractérisé en ce que** les informations contenues dans le premier et/ou deuxième plan de mesure ayant trait au moment et/ou à la position de la mise en oeuvre du plan de mesure respectif sont générées par le premier dispositif de communication mobile ou le dispositif de communication central.

11. Système de détermination de position (5') destiné à déterminer la position d'un dispositif de communication mobile (10) au moyen d'un plan de mesure, comprenant :
un système de positionnement (130'),
un premier dispositif de communication mobile (10), lequel comprend les caractéristiques suivantes :
un dispositif de réception sans fil (15), qui est conçu pour recevoir des signaux de position du système de positionnement (130'), afin de pouvoir déterminer la position propre et la précision de celle-ci,
un premier dispositif mémoire (11), dans lequel, au moins pour une des coordonnées de position de la destination géographique, peuvent être mises en mémoire les coordonnées de position d'une destination géographique prédéfinie, que le premier dispositif de communication mobile (10) atteindra à un moment ultérieur, et une précision de position prédéfinie,
un deuxième dispositif mémoire (9), dans lequel est mis en mémoire un programme de navigation basé sur des cartes,
un dispositif de commande (18), qui est conçu
- pour exécuter le programme de navigation basé sur des cartes, afin de pouvoir guider un utilisateur du premier dispositif de communication mobile (10) vers la destination géographique prédéfinie,
- pour établir un plan de mesure permettant d'obtenir des informations de position, lesquelles contiennent des coordonnées de position et la précision de celles-ci, et/ou des informations d'observation, lesquelles contiennent des valeurs d'observation et les précisions de celles-ci, où le plan de mesure contient des indications ayant trait aux mesures à prendre et une information ayant trait au moment et/ou à la position de la mise en oeuvre du premier plan de mesure,
- en réponse au plan de mesure, pour commander la réalisation de mesures simulées afin d'obtenir des informations de position d'essai et/ou d'observation d'essai, et
pour commander l'exécution d'un procédé d'ajustement sur les informations de position d'essai et/ou d'observation d'essai pour la fourniture de résultats des essais concernant les coordonnées de position de la destination géographique déterminée et la précision de position de l'au moins une coordonnée de position,
- en réponse aux résultats des essais, pour vérifier si, lors de la mise en oeuvre du plan de mesure, la précision de position prédéfinie peut être sensiblement atteinte,
- pour commander la mise en oeuvre du plan de mesure en fonction de l'information contenue dans le plan de mesure, afin d'obtenir des informations de position et/ou d'observation actuelles, et
- pour exécuter un ajustement du réseau en fonction des informations de position et/ou d'observation actuelles obtenues, afin de calculer les coordonnées de position du premier dispositif de communication mobile et la précision de position de l'au moins une coordonnée de position pour le moment auquel le premier dispositif de communication mobile (10) atteint sensiblement la destination géographique.

12. Système de détermination de position selon la revendication 11, **caractérisé par**
plusieurs deuxièmes dispositifs de communication sans fil (20, 30), lesquels sont conçus chacun pour identifier des informations de position et/ou des informations d'observation et pour les transmettre au premier dispositif de communication mobile (10), où
le premier dispositif de communication mobile (10) présente une interface de communication sans fil (14), qui est conçue pour recevoir des informations de position et/ou d'observation d'au moins un des deuxièmes dispositifs de communication (20, 30) et/ou pour les transmettre à au moins un des deuxièmes dispositifs de communication,
où le dispositif de commande (18) du premier dispositif de communication mobile (10) est conçu en outre pour identifier au moins un des deuxièmes dispositifs de communication (20) pouvant fournir des informations de position et/ou d'observation et lequel peut être pris en compte dans le plan de mesure, afin de permettre d'améliorer le calcul des coordonnées de position du premier dispositif de communication mobile et la précision de position de l'au moins une coordonnée de position.

13. Système de détermination de position selon la revendication 11, **caractérisé par**
un dispositif de communication central (120), lequel comprend les caractéristiques suivantes :
un dispositif de réception sans fil (122), qui est conçu pour recevoir des informations de position et/ou des informations d'observation d'au moins un des deuxièmes dispositifs de communication (20, 30) et/ou du premier dispositif de communication mobile (10), ainsi que la destination géographique prédéfinie du premier dispositif de communication mobile (10) et la précision de position prédéfinie de l'au moins une coordonnées de position de la destination géographique, et un dispositif de commande (121), qui est conçu
- pour identifier au moins un des deuxièmes dispositifs de communication (20, 30) pouvant contribuer à améliorer la détermination de position du premier dispositif de communication mobile (10) du point de vue de la destination géographique,
- pour commander l'établissement d'un plan de mesure permettant d'obtenir des informations de position, lesquelles contiennent des coordonnées de position et la précision de celles-ci, et/ou des informations d'observation, lesquelles contiennent des valeurs d'observation et les précisions de celles-ci, où le plan de mesure contient des indications ayant trait aux mesures à prendre et une information ayant trait au moment et/ou à la position de la mise en oeuvre du plan de mesure,
- en réponse au plan de mesure, pour commander la fourniture de résultats des essais concernant les coordonnées de position de la destination géographique spécifiée et la précision de position de l'au moins une coordonnée de position ;
- en réponse aux résultats des essais, pour vérifier si, lors de la mise en oeuvre du plan de mesure, la précision de position prédéfinie peut être sensiblement atteinte, où le dispositif de communication central (120) est conçu en outre pour transmettre le plan de mesure établi à exécuter au premier dispositif de communication mobile (10).

14. Dispositif de communication mobile (10) comprenant :
un dispositif de réception sans fil, qui est conçu pour recevoir des signaux de position d'un système de positionnement (130, 130'), afin de pouvoir déterminer la position propre et, le cas échéant, la précision de celle-ci,
un premier dispositif mémoire (11), dans lequel peuvent être mises en mémoire les coordonnées de position d'au moins une destination géographique prédéfinie que le dispositif de communication mobile atteindra sensiblement à un moment ultérieur et une précision de position prédéfinie au moins pour une des coordonnées de position de la destination géographique prédéfinie,
un deuxième dispositif mémoire (9), dans lequel peut être mis en mémoire un programme de navigation basé sur des cartes,
un dispositif de commande (18), qui est conçu
- pour exécuter le programme de navigation basé sur des cartes, afin de pouvoir guider un utilisateur du premier dispositif de communication mobile (10) vers la destination géographique prédéfinie,
- pour établir un plan de mesure permettant d'obtenir des informations de position, lesquelles contiennent des coordonnées de position et la précision de celles-ci, et/ou des informations d'observation, lesquelles contiennent des valeurs d'observation et les précisions de celles-ci, où le plan de mesure contient des indications ayant trait aux mesures à prendre et une information ayant trait au moment et/ou à la position de la mise en oeuvre du plan de mesure,
- en réponse au plan de mesure, pour commander la réalisation de mesures simulées afin d'obtenir des informations de position d'essai et/ou d'observation d'essai, et
pour commander l'exécution d'un procédé d'ajustement sur les informations de position d'essai et/ou d'observation d'essai pour la fourniture de résultats des essais concernant les coordonnées de position de la destination géographique spécifiée et la précision de position de l'au moins une coordonnée de position ;
- en réponse aux résultats des essais, pour vérifier si, lors de la mise en oeuvre du plan de mesure, la précision de position prédéfinie peut être sensiblement atteinte,
- pour commander la mise en oeuvre du plan de mesure en fonction de l'information contenue dans le plan de mesure, afin d'obtenir des informations de position et/ou d'observation actuelles, et
- pour exécuter un ajustement du réseau en fonction des informations de position et/ou d'observation actuelles obtenues, afin de calculer les coordonnées de position du premier dispositif de communication mobile et la précision de position de l'au moins une coordonnée de position pour le moment auquel le dispositif de communication mobile atteint sensiblement la destination géographique prédéfinie.

15. Dispositif de communication mobile selon la revendication 14, **caractérisé par**
une interface de communication sans fil (14), qui est conçue pour recevoir des informations de position et/ou des informations d'observation d'au moins un autre dispositif de communication et/ou pour les transmettre à au moins un autre dispositif de communication (20, 30),
dans lequel le dispositif de commande (18) est conçu en outre pour identifier au moins un des autres dispositifs de communication pouvant fournir des informations de position et/ou d'observation qui permettent d'améliorer le calcul des coordonnées de position du premier dispositif de communication mobile et de la précision de position de l'au moins une coordonnée de position lorsque la destination géographique est atteinte.

16. Programme informatique contenant :
une pluralité d'instructions, qui peuvent être mises en mémoire dans plusieurs dispositifs de communication sans fil (10, 20, 30) dont au moins l'un est réalisé sous la forme d'un dispositif de communication mobile (10), où les instructions, lorsqu'elles sont exécutées par un dispositif de commande (18) de l'au moins un dispositif de communication mobile (10), commandent le procédé selon l'une quelconque des revendications 1 à 10.
